# FASCICULE DE BREVET EUROPEEN

(11) **EP 2 585 280 B1**
(45) Date de publication et mention de la délivrance du brevet: **13.06.2018**
(21) Numéro de dépôt: 11738001.4
(22) Date de dépôt: 22.06.2011
(51) Int. Cl.: B29C 70/22, B29C 70/24, F01D 5/14, F01D 5/28, D03D 25/00, B29B 11/16, B29L 31/08

(54) **AUBE DE TURBOMACHINE A GEOMETRIE ASYMETRIQUE COMPLEMENTAIRE.**
TURBOMASCHINENSCHAUFEL MIT KOMPLEMENTÄRER ASYMMETRISCHER GEOMETRIE
TURBOMACHINE BLADE WITH COMPLEMENTARY ASYMETRIC GEOMETRY

(30) Priorité: 28.06.2010 FR 1055161
(43) Date de publication de la demande: 01.05.2013
(73) Titulaire: Safran Ceramics, 33185 Le Haillan (FR); Snecma, 75015 Paris (FR)
(72) Inventeur: ROUSSILLE, Clément, F-33200 Bordeaux (FR); MATEO, Julien, F-33360 Carignan De Bordeaux (FR)
(74) Mandataire: Desormiere, Pierre-Louis
(86) Numéro de dépôt international: PCT/FR2011/051431
(87) Numéro de publication internationale: WO 2012/001269

(56) Documents cités:
- FR-A1- 2 939 129
- US-A1- 2003 185 673

## Description

### Arrière-plan de l'invention

L'invention concerne des aubes de turbomachine en matériau composite comportant un renfort fibreux densifié par une matrice.

Le domaine visé est celui d'aubes de turbines à gaz pour moteurs aéronautiques ou turbines industrielles.

La réalisation d'aubes en matériau composite pour des turbomachines a déjà été proposée. On se référera notamment à la demande de brevet international PCT/FR2009/052309 déposée conjointement par Snecma et Snecma Propulsion Solide, et publiée sous le numéro WO 2010/061140. Cette demande décrit la fabrication d'une aube de turbomachine en matériau composite comprenant un renfort fibreux densifié par une matrice. De façon plus précise, ce procédé présente la particularité que l'ébauche fibreuse réalisée par tissage tridimensionnel est mise en forme pour obtenir une préforme fibreuse en une seule pièce ayant une première partie formant préforme de pale et pied d'aube et au moins une deuxième partie formant préforme de plateforme ou talon d'aube. Ainsi, après densification de la préforme, il est possible d'obtenir une aube en matériau composite ayant un renfort fibreux constitué par la préforme et densifié par la matrice, et formant une seule pièce avec plateforme et/ou talon intégrés.

L'aube obtenue par un tel procédé présente l'inconvénient que son talon ne peut pas intégrer à la fois une fonction d'étanchéité avec le carter qui entoure les aubes (par la présence de léchettes) et une fonction aérodynamique (par la présence de becquets de recouvrement délimitant à l'extérieur la veine d'écoulement du flux gazeux dans la turbine).

La demande de brevet français n° 09 58931 déposée conjointement par Snecma et Snecma Propulsion Solide, et publiée sous le numéro FR 2,953,885, décrit la réalisation d'une aube en matériau composite formant une seule pièce avec plateforme et talon intégré, le talon assurant à la fois la fonction d'étanchéité et la fonction aérodynamique.

Cependant, la réalisation d'un tel talon avec le procédé décrit dans la demande de brevet français n° 09 58931 implique notamment des opérations de mise en forme et de moulage avec des textures fibreuses double couche, opérations qui sont tout à fait réalisables mais qui peuvent être plus complexes à réaliser qu'avec des structures simple couche. En outre, l'aube ainsi réalisée n'intègre pas de muret anti-basculement.

Par ailleurs, en cas d'endommagement du talon de l'aube fabriquée selon le procédé décrit dans la demande de brevet français n° 09 58931, la fonction aérodynamique et la fonction d'étanchéité sont toutes les deux impactées car le talon est formé d'une seule pièce assurant ces deux fonctions.

### Objet et résumé de l'invention

Il est donc souhaitable de pouvoir disposer d'aubes de turbomachine en matériau composite, notamment mais non nécessairement en matériau composite thermostructural tel qu'en CMC, pour des turbines ou compresseurs de turbomachines, aubes qui sont relativement simples à fabriquer et qui intègrent les fonctions requises, notamment les fonctions d'étanchéité, de définition de veine du flux d'écoulement (fonction aérodynamique), et d'anti-basculement.

A cet effet, selon la présente invention, il est proposé un procédé de fabrication d'une aube de turbomachine en matériau composite comprenant un renfort fibreux densifié par une matrice, le procédé comprenant :
- la réalisation par tissage tridimensionnel d'une ébauche fibreuse en une seule pièce,
- la mise en forme de l'ébauche fibreuse pour obtenir une préforme fibreuse en une seule pièce ayant une première partie formant préforme de pale et pied d'aube, la pale d'aube présentant deux faces reliant chacune un bord d'attaque à un bord de fuite, et au moins une deuxième partie présente uniquement sur une des faces de la pale d'aube, ladite deuxième partie formant préforme d'une partie d'au moins un des éléments suivants: plateforme d'aube, muret anti-basculement d'aube, becquets de talon d'aube et léchettes de talon d'aube,
- la densification de la préforme par une matrice pour obtenir une aube en matériau composite ayant un renfort fibreux constitué par la préforme et densifié par la matrice, et formant une seule pièce avec au moins une partie d'un des éléments suivants: plateforme d'aube, muret anti-basculement d'aube, becquets de talon d'aube et léchettes de talon d'aube, présent uniquement sur une des faces de la pale d'aube.

Par rapport au procédé décrit dans la demande de brevet n° 09 58931, l'invention prévoit de faire assurer chacune des fonctions de définition de veine, d'étanchéité et d'anti-basculement par des parties distinctes de l'aube qui sont réalisées avec des textures simple couche. L'aube ainsi réalisée présente une géométrie asymétrique complémentaire assurant d'un côté de sa pâle (intrados ou extrados) les fonctions d'étanchéité par une partie de léchettes de talon d'aube, de définition de veine par des parties de plateforme et de becquet de talon d'aube et d'anti-basculement par une partie de muret anti-basculement. Cette géométrie asymétrique permet à plusieurs aubes identiques de s'imbriquer les unes avec les autres afin d'assurer les fonctions requises de chaque côté de leur pale.

Selon une particularité avantageuse du procédé, dans la direction longitudinale de l'ébauche fibreuse correspondant à la direction longitudinale de l'aube à fabriquer, l'ébauche fibreuse comprend un premier ensemble de plusieurs couches de fils qui sont liées entre elles pour former une première partie de l'ébauche correspondant à la préforme de pale et pied d'aube, et un deuxième ensemble de plusieurs couches de fils qui sont liées entre elles au moins localement pour former sur une des faces de la pale d'aube au moins la deuxième partie de l'ébauche correspondant à une préforme d'une partie d'au moins un des éléments suivants: plateforme d'aube, muret anti-basculement d'aube, becquets de talon d'aube et léchettes de talon d'aube, les fils du premier ensemble de couches de fils n'étant pas liés aux fils du deuxième ensemble de couches de fils, et le premier ensemble de couches de fils étant traversé par des fils du deuxième ensemble de couches de fils au niveau de la ou de chaque deuxième partie de l'ébauche.

L'aménagement de zones de déliaison permet une mise en forme de la préforme fibreuse sans coupe de fils de liage, une telle coupe pouvant amoindrir la tenue mécanique du renfort fibreux, donc de l'aube fabriquée.

Selon un mode de réalisation de l'invention, dans la direction longitudinale correspondant à la direction longitudinale de l'ébauche fibreuse à fabriquer, l'ébauche fibreuse comprend:
- un premier ensemble de plusieurs couches de fils qui sont liées entre elles pour former une première partie de l'ébauche correspondant à la préforme de pale et pied d'aube;
- un deuxième ensemble de plusieurs couches de fils qui sont liées entre elles au moins localement pour former sur une des faces de la pale au moins une deuxième partie de l'ébauche correspondant à la préforme d'une partie de plateforme d'aube et/ou de becquets de talon d'aube et au moins une troisième partie de l'ébauche correspondant à la préforme d'une partie de muret anti-basculement d'aube et/ou de léchettes de talon d'aube;
   les fils du premier ensemble de couches de fils n'étant pas liés aux fils du deuxième ensemble de couches de fils, et
   le premier ensemble de couches de fils étant traversé par des fils du deuxième ensemble de couches de fils au niveau de la ou de chaque deuxième partie de l'ébauche fibreuse et au niveau de la ou de chaque troisième partie de l'ébauche fibreuse.

Dans ce cas, l'ébauche fibreuse est tissée avec un deuxième ensemble continu de couches de fils et la mise en forme de l'ébauche fibreuse comprend l'élimination par découpe de parties du deuxième ensemble de couches de fils extérieures à la ou à chaque deuxième partie de l'ébauche fibreuse et à la ou à chaque troisième partie de l'ébauche fibreuse.

Selon un autre mode de réalisation de l'invention, dans la direction longitudinale correspondant à la direction longitudinale de l'ébauche fibreuse à fabriquer, l'ébauche fibreuse comprend:
- un premier ensemble de plusieurs couches de fils qui sont liées entre elles pour former une première partie de l'ébauche correspondant à la préforme de pale et pied d'aube;
- un deuxième ensemble de plusieurs couches de fils qui sont liées entre elles au moins localement pour former sur une des faces de la pale au moins une deuxième partie de l'ébauche correspondant à la préforme d'une partie d'au moins un des éléments suivants: plateforme d'aube, muret anti-basculement d'aube, becquets de talon d'aube et léchettes de talon d'aube et une troisième partie de l'ébauche correspondant à la préforme de tout ou partie d'un desdits éléments autre que celui formé par la deuxième partie; et
- un troisième ensemble de plusieurs couches de fils qui sont liées entre elles au moins localement pour former sur une face de la pale au moins une quatrième partie de l'ébauche correspondant à la préforme de tout ou partie d'un desdits éléments autre que celui formé par les deuxième et troisième parties et une cinquième partie de l'ébauche correspondant à la préforme de tout ou partie d'un desdits éléments autre que celui formé par les deuxième, troisième et quatrième parties;
   les fils du premier ensemble de couches de fils n'étant pas liés aux fils des deuxième et troisième ensembles de couches de fils, et
   le premier ensemble de couches de fils étant traversé par des fils des deuxième et troisième ensembles de couches de fils au niveau des deuxième, troisième, quatrième et cinquième parties de l'ébauche fibreuse.

Dans ce cas, l'ébauche fibreuse est tissée avec un deuxième ensemble et un troisième ensemble continus de couches de fils et la mise en forme de l'ébauche fibreuse comprend l'élimination par découpe de parties des deuxième et troisième ensembles de couches de fils extérieures aux deuxième, troisième, quatrième et cinquième parties de l'ébauche fibreuse.

Selon encore une autre particularité du procédé, dans la première partie de l'ébauche fibreuse et dans une direction correspondant à celle s'étendant le long du profil d'une pale d'épaisseur variable dans l'aube à fabriquer, le nombre de couches de fils dans le premier ensemble de couches de fils est constant. Les fils du premier ensemble de fils peuvent alors être de titre et/ou de contexture variable.

Avantageusement, on réalise par tissage tridimensionnel une bande comprenant une succession d'ébauches fibreuses. Celles-ci peuvent ensuite être découpées dans la bande. Les ébauches peuvent être tissées avec la direction longitudinale de l'aube à fabriquer en sens trame ou en sens chaîne.

Selon la présente invention, il est proposé aussi une aube de turbomachine en matériau composite comprenant un renfort fibreux obtenu par tissage tridimensionnel de fils et densifié par une matrice, l'aube comprenant une première partie constitutive de pale et pied d'aube, la pale d'aube présentant deux faces reliant chacune un bord d'attaque à un bord de fuite, la première partie formant une seule pièce avec au moins une deuxième partie présente uniquement sur une des faces de la pale d'aube, la deuxième partie étant constitutive d'une partie d'au moins un des éléments suivants: plateforme d'aube, muret anti-basculement d'aube, becquets de talon d'aube et léchettes de talon d'aube, les parties du renfort fibreux correspondant à la première et la deuxième parties de l'aube étant au moins en partie mutuellement imbriquées, avec des fils de la première partie du renfort fibreux pénétrant dans la deuxième partie de renfort fibreux.

Selon un mode de réalisation de l'invention, la deuxième partie est constitutive d'une partie d'un des éléments suivants: plateforme d'aube, muret anti-basculement d'aube, becquets de talon d'aube et léchettes de talon d'aube, la première partie formant en outre une seule pièce avec au moins une troisième partie constitutive d'une partie d'au moins un desdits éléments autre que celui constitué par la deuxième partie, la troisième partie étant présente uniquement sur une face de la pale, les parties du renfort fibreux correspondant aux première, deuxième et troisième parties de l'aube étant au moins en partie mutuellement imbriquées, avec des fils de la première partie du renfort fibreux pénétrant dans les deuxième et troisième parties de renfort fibreux.

Dans ce cas, la première partie peut former en outre une seule pièce avec au moins une quatrième partie constitutive d'une partie d'au moins un desdits éléments autre que celui constitué par lesdites deuxième et troisième parties, la quatrième partie étant présente uniquement sur une face de la pale, les parties du renfort fibreux correspondant aux première, deuxième, troisième et quatrième parties de l'aube étant au moins en partie mutuellement imbriquées, avec des fils de la première partie du renfort fibreux pénétrant dans les deuxième, troisième et quatrième parties de renfort fibreux.

La première partie peut former en outre une seule pièce avec au moins une cinquième partie constitutive d'une partie d'au moins un desdits éléments autre que celui constitué par lesdites deuxième, troisième et quatrième parties, ladite cinquième partie étant présente uniquement sur une face de la pale, les parties du renfort fibreux correspondant aux première, deuxième, troisième, quatrième et cinquième parties de l'aube étant au moins en partie mutuellement imbriquées, avec des fils de la première partie du renfort fibreux pénétrant dans les deuxième, troisième, quatrième et cinquième parties de renfort fibreux.

Selon un autre mode de réalisation, la deuxième partie est constitutive d'une partie d'un des éléments suivants: plateforme d'aube, muret anti-basculement d'aube, becquets de talon d'aube et léchettes de talon d'aube, la première partie formant en outre une seule pièce avec au moins une troisième partie constitutive de tout ou partie d'au moins un desdits éléments autre que celui constitué par ladite deuxième partie, les parties du renfort fibreux correspondant aux première, deuxième et troisième parties de l'aube étant au moins en partie mutuellement imbriquées, avec des fils de la première partie du renfort fibreux pénétrant dans les deuxième et troisième parties de renfort fibreux.

L'aube peut être en un matériau composite à matrice céramique.

Selon une particularité de l'aube, des fils constitutifs de la partie du renfort fibreux correspondant à la deuxième, troisième, quatrième et/ou cinquième parties de l'aube traversent la partie du renfort fibreux correspondant à la première partie de l'aube.

La pale de l'aube peut avoir un profil d'épaisseur variable le long duquel la partie de renfort fibreux correspondant à la première partie de l'aube a, dans la direction longitudinale de l'aube, un nombre constant de couches de fils ayant un titre et/ou une contexture variable, ou un nombre variable de couches de fils.

L'invention vise aussi un rotor ou disque de turbomachine et une turbomachine équipés d'une aube telle que définie ci-avant.

### Brève description des dessins

L'invention sera mieux comprise à la description faite ci-après, à titre indicatif mais non limitatif, en référence aux dessins annexés sur lesquels :
- la figure 1 est une vue en perspective d'une aube de turbomachine conformément à un mode de réalisation de l'invention ;
- les figures 2A à 2C sont des vues agrandies de parties de l'aube de la figure 1 ;
- la figure 3 illustre de façon très schématique la disposition de trois ensembles de couches de fils dans une ébauche fibreuse tissée tridimensionnelle destinée à la réalisation d'une préforme fibreuse pour une aube telle que celle illustrée par la figure 1 ;
- les figures 4, 5 et 6 illustrent des étapes successives de réalisation d'une préforme fibreuse pour une aube telle qu'illustrée par la figure 1, à partir de l'ébauche fibreuse de la figure 3 ;
- la figure 7 est une vue en coupe montrant le profil, mis à plat, d'une pale d'aube telle que celle de la figure 1 ;
- la figure 8 est une vue en coupe d'un ensemble de couches de fils de chaîne permettant d'obtenir un profil tel que celui de la figure 7 ;
- les figures 9A et 9B sont des vues en coupe chaîne montrant un mode de tissage de l'ébauche fibreuse de la figure 3 ;
- les figures 10A et 10B sont des vues partielles en coupe selon un plan parallèle aux directions chaîne et trame dans une partie de l'ébauche fibreuse de la figure 3 correspondant à l'emplacement de jonction entre, d'une part, pale et partie de muret anti-basculement d'aube et, d'autre part, entre pale et partie de plateforme d'aube ;
- la figure 10C est une vue partielle en coupe trame dans une partie de l'ébauche fibreuse de la figure 2 correspondant à l'emplacement de jonction entre pale et parties de muret anti-basculement d'aube et de partie de plateforme d'aube ;
- les figures 11A et 11B sont des vues partielles en coupe selon un plan parallèle aux directions chaîne et trame dans une partie de l'ébauche fibreuse de la figure 3 correspondant à l'emplacement de jonction entre, d'une part, pale et partie de becquet de talon d'aube et, d'autre part, entre pale et partie de léchettes de talon d'aube ;
- la figure 11C est une vue partielle en coupe trame dans une partie de l'ébauche fibreuse de la figure 2 correspondant à l'emplacement de jonction entre pale et parties de muret anti-basculement d'aube et de partie plateforme d'aube ;
- la figure 12A est une vue en coupe trame montrant un exemple de disposition de fils de trame dans une partie d'ébauche fibreuse correspondant à une partie de pied de pale ;
- les figures 12B à 12D sont des vues en coupe trame montrant des plans de chaîne pour un exemple de tissage tridimensionnel (multicouches) dans la partie d'ébauche fibreuse de la figure 12A ;
- la figure 13 est une vue schématique partielle en coupe montrant un autre mode de réalisation d'une partie d'ébauche correspondant à un pied de pale ;
- les figures 14 et 15 illustrent très schématiquement deux modes de réalisation d'une bande fibreuse tissée obtenue par tissage tridimensionnel comprenant une pluralité d'ébauches fibreuses telles que celle de la figure 3 ;
- la figure 16 indique des étapes successives d'un mode de réalisation d'un procédé de fabrication d'une aube de turbomachine conformément à l'invention ;
- la figure 17 indique des étapes successives d'un autre mode de réalisation d'un procédé de fabrication d'une aube de turbomachine conformément à l'invention ;
- la figure 18 montre le montage sur un rotor de turbomachine d'une pluralité d'aubes similaires à celle de la figure 1 ; et
- la figure 19 est une vue en perspective d'une aube de turbomachine conformément à un autre mode de réalisation de l'invention.

### Description détaillée de modes de réalisation

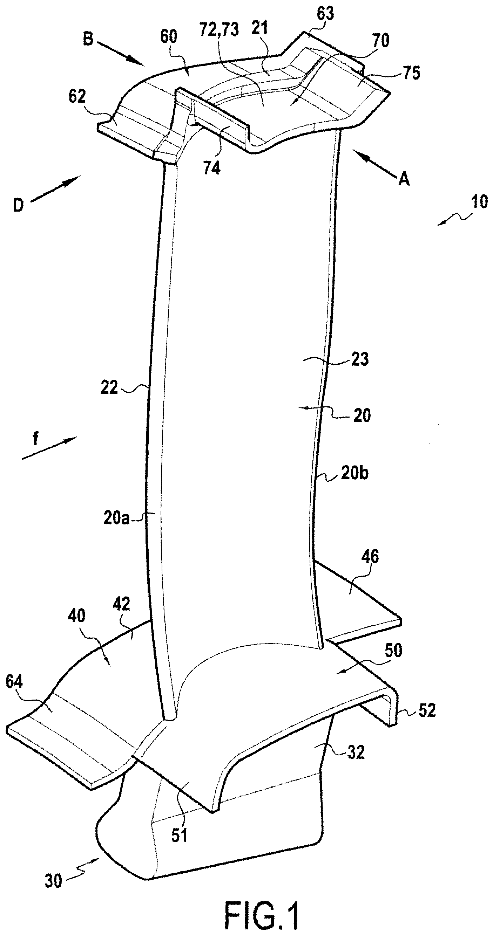

L'invention est applicable à différents types d'aubes de turbomachine à plateformes et/ou talon intégrés, notamment des aubes de compresseur et de turbine de différents corps de turbines à gaz, par exemple une aube de roue mobile de turbine basse pression (BP), telle que celle illustrée par la figure 1.

L'aube 10 de la figure 1 comprend de façon en soi bien connue, une pale 20, un pied 30 formé par une partie de plus forte épaisseur, par exemple à section en forme de bulbe, prolongé par une échasse 32. La pale 20 s'étend en direction longitudinale entre son pied 30 et son sommet 21 et présente en section transversale un profil incurvé d'épaisseur variable délimitant deux faces 22 et 23, correspondant respectivement à l'extrados et à l'intrados de la pale 20 et reliant chacune le bord d'attaque 20a et le bord de fuite 20b de cette dernière.

L'aube 10 est montée sur un rotor de turbine (non illustré) par engagement du pied 30 dans un logement de forme correspondante aménagé à la périphérie du rotor.

Conformément à un mode de réalisation de l'invention, la pale 20 comprend en outre quatre élément distincts formant respectivement une partie de plateforme d'aube 40, une partie de muret anti-basculement d'aube 50, une partie de becquets de talon d'aube 60 et une partie de léchettes de talon d'aube 70.

Plus précisément, à son extrémité radiale interne et sur sa face 22, la pale 20 se raccorde à la partie de plateforme d'aube 40 dont la face externe (ou supérieure) 42 délimite, radialement à l'intérieur, la veine d'écoulement d'un flux gazeux f. Dans ses parties d'extrémité amont et aval (dans le sens f d'écoulement du flux gazeux), la partie de la plateforme 40 se termine par des becquets de recouvrement 44 et 46. Dans l'exemple illustré, la face 42 de la partie de plateforme est inclinée en formant globalement un angle non nul par rapport à la normale à la direction longitudinale de l'aube. Selon le profil souhaité de la surface intérieure de la veine d'écoulement de flux gazeux, l'angle pourrait être nul, ou la face 42 pourrait avoir un profil globalement non rectiligne, par exemple incurvé.

Toujours à son extrémité radiale interne mais sur sa face 21, la pale 20 se raccorde à la partie de muret anti-basculement 50 qui comporte à ses extrémités amont et aval des flancs 51 et 52 aptes à prévenir le basculement de l'aube lorsque cette dernière est montée sur un rotor de turbine.

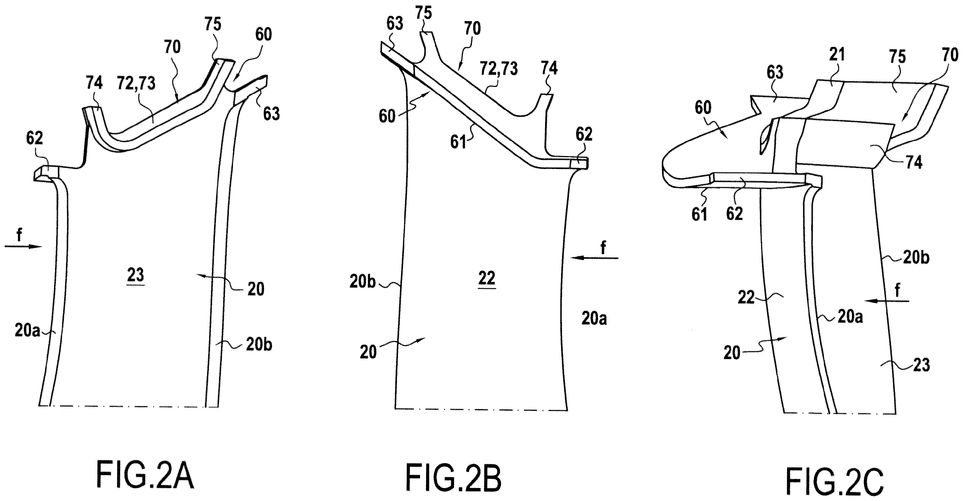

La pale 20 se raccorde en outre à son extrémité radiale externe et sur sa face 22 à la partie de becquets de talon d'aube 60 qui délimite sur sa face interne 61 (inférieure), radialement à l'extérieur, la veine d'écoulement du flux gazeux f (figures 1 et 2C). Dans ses parties d'extrémité amont et aval, la partie de becquets de talon d'aube 60 se termine par des becquets de recouvrement 62 et 63. Dans l'exemple illustré, la face 61 de la partie de becquets de talon d'aube 60 présente un profil rectiligne incliné formant globalement un angle non nul par rapport à la normale à la direction longitudinale de l'aube ou la face 61 (figure 2B). En variante, selon le profil souhaité de la surface extérieure de la veine d'écoulement de flux gazeux, la face 61 pourrait avoir un profil globalement non rectiligne, par exemple incurvé, et/ou s'étendre sensiblement perpendiculairement à la direction longitudinale de l'aube.

Toujours à son extrémité radiale externe mais sur sa face 21, la pale se raccorde à la partie de léchettes de talon d'aube 70. Sur sa face externe (supérieure) 72, la partie de léchettes de talon d'aube 70 délimite une dépression ou baignoire 73 (figures 1 et 2A). Le long des bords amont et aval de la baignoire 73, la partie 70 porte des léchettes 74 et 75 à profil en forme de dents dont les extrémités peuvent pénétrer dans une couche de matériau abradable d'un anneau de turbine (non représenté) pour réduire le jeu entre le sommet d'aube et l'anneau de turbine.

Comme illustrées sur la figure 1, la partie de plateforme d'aube 40, la partie de muret anti-basculement d'aube 50, la partie de becquets de talon d'aube 60 et la partie de léchettes de talon d'aube 70 sont respectivement uniquement présentes sur une des faces de la pale. En d'autres termes, la face de la pale opposée à celle comportant un ou plusieurs de ces éléments est dépourvue du ou de ces mêmes éléments. Ainsi, les fonctions de définition de veine (radialement à l'extérieur) et d'anti-basculement habituellement réalisées par un seul et même élément présent à l'extrémité radiale interne de la pale sont réalisées, dans l'aube de l'invention, par des éléments distincts à savoir dans l'exemple décrit ici par la partie de plateforme d'aube 40 et la partie de muret anti-basculement d'aube 50. De même, les fonctions définition de veine et d'étanchéité basculement habituellement réalisées par un seul et même élément présent à l'extrémité radiale externe de la pale sont réalisées, dans l'aube de l'invention, par des éléments distincts à savoir dans l'exemple décrit ici par la partie de becquets de talon d'aube 60 et la partie de léchettes de talon d'aube 70.

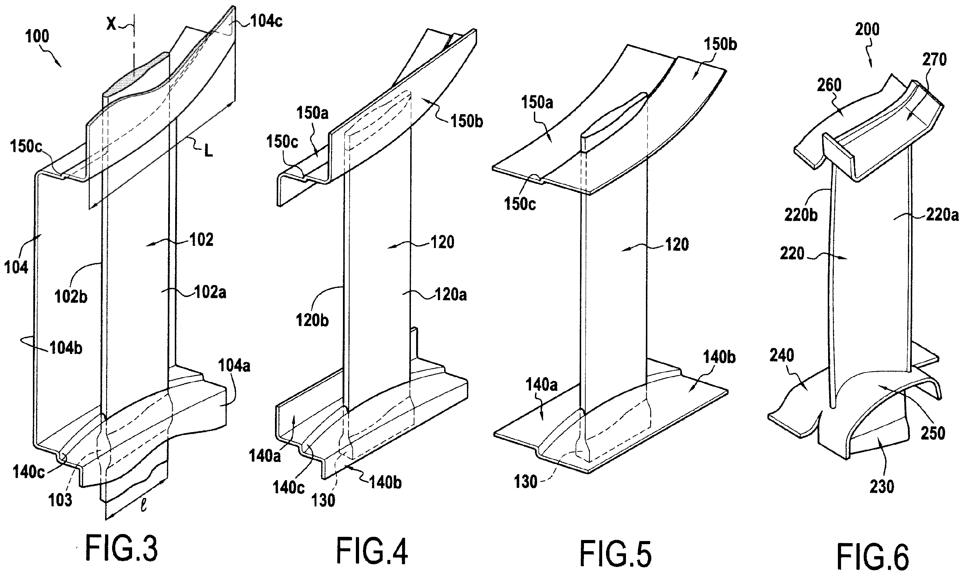

La figure 3 montre très schématiquement une ébauche fibreuse 100 à partir de laquelle une préforme fibreuse d'aube peut être mise en forme afin, après densification par une matrice et usinage éventuel, d'obtenir une aube en matériau composite avec des parties de plateforme, de muret anti-basculement, de becquets et de léchettes de talon intégrées telle que celle illustrée par la figure 1.

L'ébauche 100 comprend deux parties 102 et 104 obtenues par tissage tridimensionnel ou tissage multicouches, seules les enveloppes de ces trois parties étant représentées sur la figure 3. La partie 102 est destinée, après mise en forme, à constituer une partie de préforme fibreuse d'aube correspondant à une préforme de pale et pied d'aube. La partie 104 est destinée, après mise en forme, à constituer les parties de préforme fibreuse d'aube correspondant à des préformes de partie de muret anti-basculement d'aube, de partie de léchettes de talon d'aube, de partie de plateforme d'aube et de partie de becquets de talon d'aube.

Les deux parties 102 et 104 sont sous forme de bandes s'étendant de façon générale dans une direction X correspondant à la direction longitudinale de l'aube à réaliser. La bande fibreuse 102 présente, dans sa partie destinée à former une préforme de pale, une épaisseur variable déterminée en fonction de l'épaisseur de profil de la pale de l'aube à réaliser. Dans sa partie destinée à former une préforme de pied, la bande fibreuse 102 présente une surépaisseur 103 déterminée en fonction de l'épaisseur du pied de l'aube à réaliser.

La bande fibreuse 102 a une largeur l choisie en fonction de la longueur du profil développé (à plat) de la pale et du pied de l'aube à réaliser tandis que les bandes fibreuses 104 et 106 ont chacune une largeur L supérieure à l choisie en fonction des longueurs développées des parties de muret anti-basculement, de plateforme, de becquets et de léchettes de talon d'aube à réaliser.

La bande fibreuse 104 a une épaisseur sensiblement constante déterminée en fonction des épaisseurs des parties de muret anti-basculement, de plateforme et de becquets et léchettes de talon de l'aube à réaliser. La bande 104 comprend une première partie 104a, qui s'étend le long et au voisinage d'une première face 102a de la bande 102 destinée à former la face intrados de la pale, une deuxième partie 104b, qui s'étend le long et au voisinage de la deuxième face 102b de la bande 102 destinée à former la face extrados de la pale, et une troisième partie 104c, qui s'étend le long et au voisinage de la première face 102a de la bande 102.

Les parties 104a et 104b de la bande 104 se raccordent par une partie de raccordement 140c qui s'étend transversalement par rapport à la bande 102 à un emplacement correspondant à celui de la partie de muret anti-basculement et de la partie de plateforme d'aube à réaliser.

Les parties 104b et 104c de la bande 104 se raccordent par une partie de raccordement 150c qui s'étend transversalement par rapport à la bande 102 à un emplacement correspondant à celui de la partie de léchettes de talon de l'aube et de la partie de becquets de talon d'aube à réaliser.

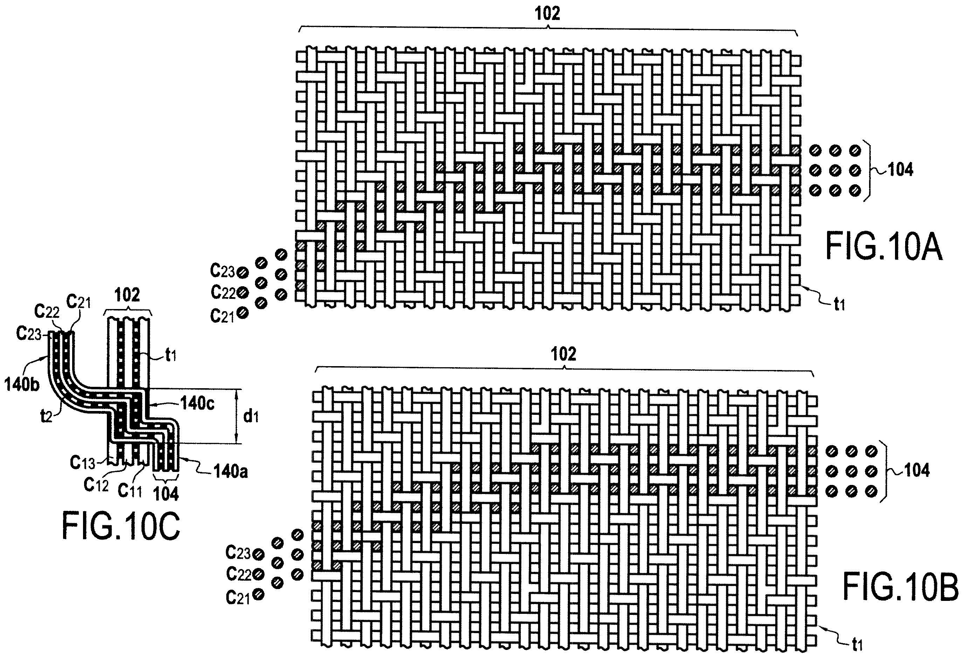

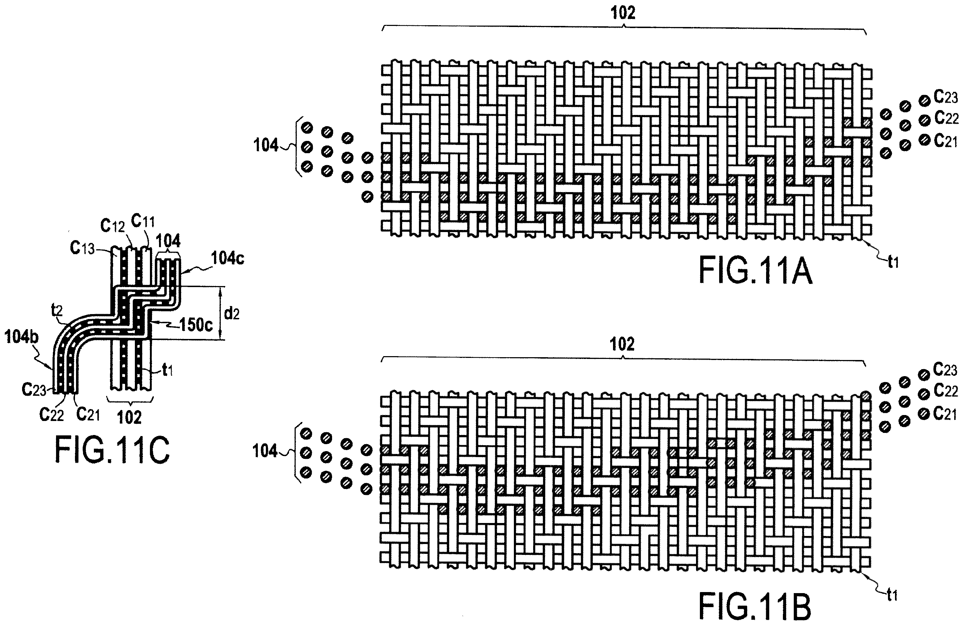

Selon la géométrie souhaitée au niveau de la partie de léchettes de talon de l'aube, de la partie de becquets de talon d'aube, de la partie muret anti-basculement et de la partie plateforme d'aube, les parties de raccordement 140c et 150c pourront traverser la bande 102, en entrée et/ou en sortie, sensiblement perpendiculairement à la direction longitudinale X de l'ébauche ou suivant un profil courbée comme décrit ci-après en relation avec les figures 10A, 10B, 11A et 11B. Comme décrit plus en détails plus loin, les bandes 102 et 104 sont tissées simultanément par tissage tridimensionnel, sans liaison, entre la bande 102 et les parties 104a, 104b et 104c de la bande 104 et en tissant une pluralité d'ébauches 100 successives de façon continue dans la direction X.

Les figures 4 à 6 montrent très schématiquement comment une préforme fibreuse ayant une forme proche de celle de l'aube à fabriquer peut être obtenue à partir de l'ébauche fibreuse 100.

La bande fibreuse 102 est coupée à une extrémité dans la surépaisseur 103 et à une autre extrémité un peu au-delà de la partie de raccordement 150c pour avoir une bande 120 de longueur correspondant à la dimension longitudinale de l'aube à fabriquer avec une partie renflée 130 formée par une partie de la surépaisseur 103 et située à un emplacement correspondant à la position du pied de l'aube à fabriquer.

En outre, des découpes sont pratiquées aux extrémités des parties 104a et 104c de la bande 104 et dans la partie 104b de celle-ci de manière à libérer des tronçons indépendants 140a et 140b s'étendant de part et d'autre de la partie de raccordement 140c ainsi que des tronçons indépendants 150a et 150b de part et d'autre de la partie de raccordement 150c, comme le montre la figure 4.

Les longueurs des parties 140a, 140b, 150a et 150b sont déterminées en fonction des longueurs des parties de plateforme, de muret anti-basculement, de becquets de talon et de léchettes de talon dans l'aube à fabriquer.

Du fait de la déliaison entre la bande 102 et les parties 104a, 104b et 104c de la bande 104, les parties 140a, 140b, 150a et 150b peuvent être rabattues perpendiculairement à la bande 102 sans couper de fils pour former des plateaux comme montré par la figure 5.

Une préforme fibreuse 200 de l'aube à fabriquer est ensuite obtenue par moulage avec déformation de la bande 102 pour reproduire le profil incurvé de la pale de l'aube. Les parties 140a et 140b sont également déformées pour reproduire des formes semblables respectivement à celle de la partie de plateforme de l'aube (avec notamment ses becquets de recouvrement) et à celle de la partie du muret anti-basculement de l'aube. De même, les parties 150a et 150b sont déformées pour reproduire des formes semblables respectivement à celle de la partie des becquets de talon d'aube et de la partie de léchettes du talon de l'aube (voir la figure 5). On obtient ainsi une préforme 200 avec une partie 220 de préforme de pale comportant une face 220a destinée à former le côté intrados de la pale et une face 220b destinée à former le côté extrados de la pale, une partie 230 de préforme de pied (avec préforme d'échasse), une partie 240 de préforme de partie de plateforme, une partie 250 de préforme de partie de muret anti-basculement, une partie 260 de préforme de partie de becquets de recouvrement de talon d'aube et une partie 270 de préforme de partie de léchettes de talon (figure 6).

Comme décrit plus loin, les étapes de réalisation d'une préforme d'aube à partir d'une ébauche fibreuse sont avantageusement réalisées après traitement des fibres de l'ébauche et imprégnation de celle-ci par une composition de consolidation.

Un mode de tissage tridimensionnel de l'ébauche fibreuse 100 sera maintenant décrit plus en détail.

Il est supposé que le tissage est réalisé avec des fils de chaîne s'étendant dans la direction longitudinale X de l'ébauche, étant noté qu'un tissage avec des fils de trame dans cette direction est également possible.

La variation d'épaisseur de la bande 102 sur sa largeur est obtenue en utilisant des fils de chaîne de titre variable. On peut en variante ou en complément faire varier la contexture des fils de chaîne (nombre de fils par unité de longueur en sens trame), une contexture plus faible autorisant un amincissement plus important lors de la mise en forme de la préforme par moulage.

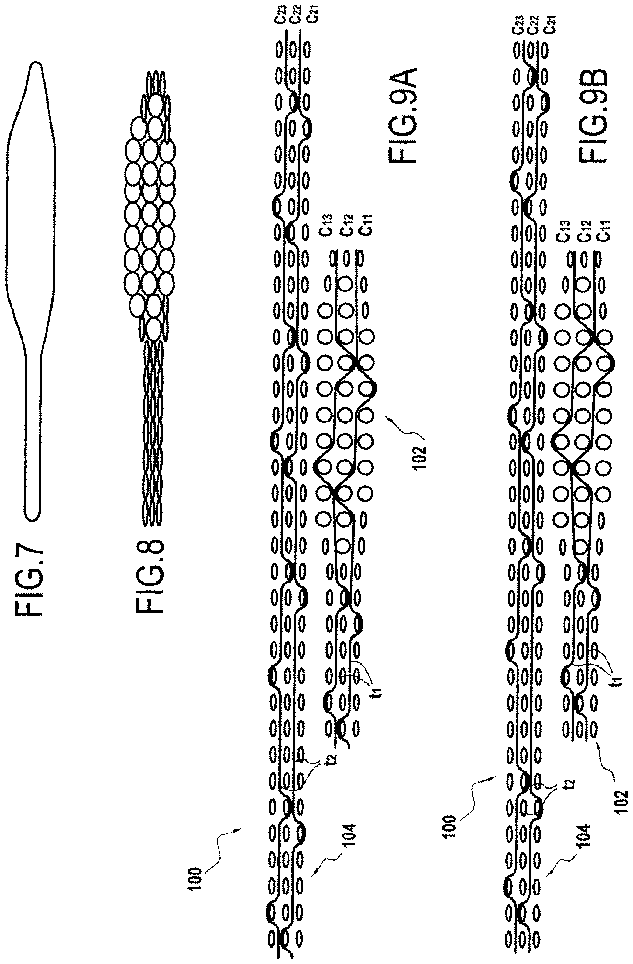

Ainsi, pour obtenir un profil de pale d'aube tel que représenté en projection à plat sur la figure 7, on peut utiliser 3 couches de fils de chaîne de titre et de contexture variables comme illustré par la figure 8.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments).

On forme la chaîne avec des fils SiC de 0,5K et des fils SiC de 1K obtenus par la réunion de deux fils de 0,5K, les deux fils étant réunis par guipage. Le guipage est réalisé avantageusement avec un fil à caractère fugace susceptible d'être éliminé après tissage, par exemple un fil en alcool polyvinylique (PVA) éliminable par dissolution dans l'eau.

Le tableau I ci-dessous donne, pour chaque colonne de fils de chaîne, la contexture (nombre de fils/cm dans la longueur du profil), le nombre de fils 0,5K, le nombre de fils 1K et l'épaisseur de profil en mm, celle-ci variant ici entre 1 mm et 2,5 mm environ :

**Tableau I**

| Colonne | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Contexture | 6 | 6 | 6 | 6 | 6 | 6 | 6 | 8 | 8 | 8 | 8 | 8 | 8 | 8 | 8 | 8 | 8 | 8 | 6 |
| Nb fils 0,5K | 3 | 3 | 3 | 3 | 3 | 3 | 3 | 2 | 1 | 0 | 0 | 0 | 0 | 0 | 0 | 0 | 2 | 1 | 3 |
| Nb fils 2x0,5K | 0 | 0 | 0 | 0 | 0 | 0 | 0 | 1 | 2 | 3 | 3 | 3 | 3 | 3 | 3 | 3 | 1 | 2 | 0 |
| Epaisseur | 1 | 1 | 1 | 1 | 1 | 1 | 1,2 | 1,5 | 2 | 2,2 | 2,4 | 2,5 | 2,4 | 2,4 | 2,2 | 2,1 | 1,8 | 1,5 | 1,2 |

Bien entendu, selon les titres de fils disponibles, différentes combinaisons de nombres de couches de fils et de variations de contexture et de titre pourront être adoptées pour le profil à obtenir.

Les figures 9A, 9B montrent, en coupe chaîne, deux plans successifs d'une armure pouvant être utilisée pour le tissage de l'ébauche fibreuse 100 de la figure 3 hors de la surépaisseur 103.

La bande 102 de l'ébauche fibreuse 100 comprend un ensemble de couches de fils de chaîne, le nombre de couches étant ici par exemple égal à 3 (couches C₁₁, C₁₂, C₁₃). Les fils de chaîne sont liés par des fils de trame t₁ par tissage tridimensionnel.

La bande 104 comprend aussi un ensemble de couches de fils de chaîne par exemple également égal à 3 (couches C₂₁, C₂₂, C₂₃) liés par des fils de trame t₂ par tissage tridimensionnel, comme la bande 102.

On note que les fils de trame t₁ ne s'étendent pas dans les couches de fils de chaîne de la bande 104, que les fils de trame t₂ ne s'étendent pas dans les couches de fils de chaîne de la bande 102 afin d'assurer une déliaison.

Dans l'exemple illustré, le tissage est un tissage multicouches réalisé avec une armure de type satin, ou multi-satin. D'autres types de tissage tridimensionnel pourront être utilisés, par exemple un tissage multicouches à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage tridimensionnel sont notamment décrits dans le document WO 2006/136755.

Les figures 10A et 10B sont des vues en coupe parallèlement aux sens chaîne et trame au niveau de la traversée de la bande 102 respectivement par les parties de raccordement 140c et 150c de la bande 104 de l'ébauche fibreuse de la figure 3. La figure 10A montre l'entrée des fils de chaîne dans la bande 104 du côté de la face 102a (intrados) de la bande 102 au niveau de la partie de raccordement 140c. A cet endroit, chaque couche de fils de chaîne de la bande 104 (ici les couches C₂₁, C₂₂, C₂₃) pénètre entre des fils de trame t₁ de la bande 102 suivant un profil incurvé tel que représenté sur la figure 10A.

La figure 10B montre la sortie des fils de chaîne dans la bande 104 du côté de la face 102b (extrados) de la bande 102 au niveau de la partie de raccordement 140c. A cet endroit, chaque couche de fils de chaîne de la bande 104 (ici les couches C₂₁, C₂₂, C₂₃) sortent entre des fils de trame t₁ de la bande 102 suivant un profil incurvé tel que représenté sur la figure 10B.

Bien entendu, suivant la forme de la partie de muret anti-basculement et de la partie de plateforme d'aube désirée, les couches de fils de chaîne de la bande 104 peuvent entrer et sortir de la bande 102 avec des profils de formes différentes comme des profils rectilignes par exemple.

Le passage de la bande 104 d'un côté à l'autre de la bande 102 est réalisé, lors du tissage, en faisant traverser l'ensemble des fils de chaîne et de trame de la bande 102 par chaque fil de chaîne de la bande 104 individuellement.

La figure 10C est une vue en coupe trame au niveau de la traversée de la bande 102 par la partie de raccordement 140c de la bande 104. On constate que les couches de fils de chaîne de la bande 104 (ici les couches C₂₁, C₂₂, C₂₃), et bien entendu les fils de trame t₁ de la bande 104, ne ressortent pas de la bande 102 au même niveau que celui de leur entrée dans la bande 102. En effet, entre leur entrée (côté face 102a) dans la bande 102 et leur sortie (côté face 102b), les fils de chaîne de la bande 104 sont maintenus à l'intérieur de la bande 102 sur une distance d₁ qui permet de former le décalage entre les partie 104a et 104b au niveau de la partie de raccordement 140c (figure 3). Ce décalage permet de former, comme illustré sur la figure 1, une partie de plateforme d'aube 40 qui est au-dessus de la partie de muret anti-basculement 50 dans la direction de la pale 20.

Les figures 11A et 11B sont des vues en coupe parallèlement aux sens chaîne et trame au niveau de la traversée de la bande 102 par la partie de raccordement 150c de la bande 104 de l'ébauche fibreuse de la figure 3. La figure 11A montre l'entrée des fils de chaîne dans la bande 104 du côté de la face 102b (extrados) de la bande 102 au niveau de la partie de raccordement 150c. A cet endroit, chaque couche de fils de chaîne de la bande 104 (ici les couches C₂₁, C₂₂, C₂₃) pénètre entre des fils de trame t₁ de la bande 102 suivant un profil incurvé tel que représenté sur la figure 11A.

La figure 11B montre la sortie des fils de chaîne dans la bande 104 du côté de la face 102a (intrados) de la bande 102 au niveau de la partie de raccordement 150c. A cet endroit, chaque couche de fils de chaîne de la bande 104 (ici les couches C₂₁, C₂₂, C₂₃) sortent entre des fils de trame t₁ de la bande 102 suivant un profil incurvé tel que représenté sur la figure 11B.

Bien entendu, suivant la forme de la partie becquet de talon d'aube et de la partie léchettes de talon d'aube désirée, les couches de fils de chaîne de la bande 104 peuvent entrer et sortir de la bande 102 avec des profils de formes différentes comme des profils rectilignes par exemple.

La figure 11C est une vue en coupe trame au niveau de la traversée de la bande 102 par la partie de raccordement 150c de la bande 104. On constate que les couches de fils de chaîne (ici les couches C₂₁, C₂₂, C₂₃) de la bande 104, et bien entendu les fils de trame t₁ de la bande 104, ne ressortent pas de la bande 102 au même niveau que celui de leur entrée dans la bande 102. En effet, entre leur entrée (côté face 102b) dans la bande 102 et leur sortie (côté face 102a), les fils de chaîne de la bande 104 sont maintenus à l'intérieur de la bande 102 sur une distance d₂ qui permet de former le décalage entre les partie 104b et 104c au niveau de la partie de raccordement 150c (figure 3). Ce décalage permet de former, comme illustré sur la figure 1, une partie de léchettes de talon d'aube 70 qui est au-dessus de la partie de becquet de talon d'aube 60 dans la direction de la pale 20.

La surépaisseur 103 peut être obtenue en utilisant des fils de trame de plus gros titre et des couches supplémentaires de fils de trame.

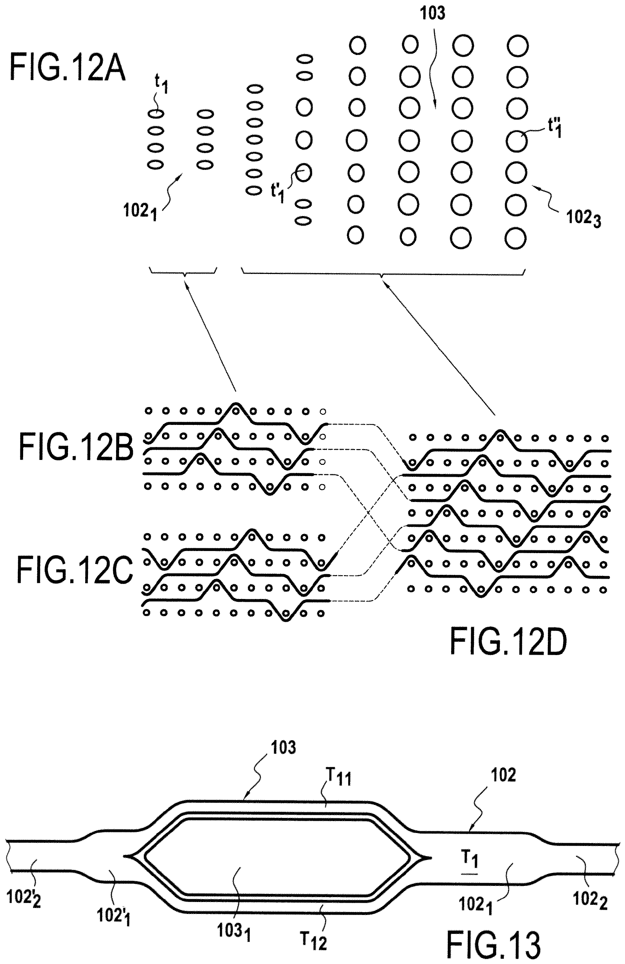

Sur la figure 12A, le nombre de couches de fils de trame passe dans cet exemple de 4 à 7 entre une partie 102₁ de la bande 102, correspondant à l'échasse de l'aube et la partie 102₃ de la bande 102 présentant la surépaisseur 103.

En outre, des fils de trame t₁, t'₁, t"₁ de titres différents sont utilisés, les fils t₁ étant par exemple des fils de SiC "Nicalon" de titre 0,5K (500 filaments), les fils t'₁ étant obtenus par la réunion de 2 fils de 0,5K et les fils t"₁ par la réunion de 3 fils de 0,5K.

Le tissage dans la partie d'ébauche 102₃ nécessite des couches de fils de chaîne en plus grand nombre que dans la partie 102₁. Cela est avantageusement réalisé lors de la transition entre la partie 102₁ et la partie 102₃ en diminuant le nombre de plans de chaîne en constituant chaque plan de chaîne dans la partie 102₃ par la réunion des fils de chaîne de deux plans de chaîne de la partie 102₁. Les figures 12B et 12C montrent deux plans de chaîne voisins dans la partie 102₁ et la figure 12D montre un plan de chaîne obtenu dans la partie 102₃ par la réunion des plans de chaîne des figures 12B et 12C. Sur les figures 12B, 12C et 12D, on n'a pas montré les titres différents des fils de chaîne (comme montré sur la figure 8) ou des fils de trame par souci de simplicité. Entre les figures 12B, 12C, d'une part, et la figure 12D, d'autre part, les tirets montrent comment les fils de chaîne des différentes couches dans les figures 12B, 12C forment les couches de fils de chaîne de la figure 12D.

Bien entendu, différentes combinaisons de nombres de couches de trame et de titres de fils de trame pourront être adoptées pour former la surépaisseur 103.

Selon un autre mode de réalisation montré schématiquement sur la figure 13, la surépaisseur 103 peut être obtenue en introduisant un insert lors du tissage de la bande 102.

Sur la figure 13, l'ensemble T₁ de couches de fils de trame de la partie 102₁ de la bande 102 correspondant à l'échasse de l'aube est divisé par déliaison lors du tissage en deux sous-ensembles T₁₁, T₁₂ entre lesquels un insert 103₁ est introduit. Dans l'exemple illustré, la partie 102₁ a une épaisseur plus importante que celle de la partie 102₂ de la bande 102 correspondant à la pale de l'aube. La transition entre la partie 102₂ et la partie 102₁ pourra être réalisée de la même manière que décrit plus haut pour la transition entre les parties 102₁ et 102₃ de la figure 12A. La traversée de la bande 102 par la bande 104 et au niveau de la partie de raccordement 140ç de la figure 3 pourra éventuellement être réalisée à travers la partie 102₁ de plus forte épaisseur.

A l'extrémité de l'insert 103, opposée à la partie 102₁, les sous-ensembles T₁₁, T₁₂ de couches de fils de trame sont à nouveau réunis par tissage pour former une partie 102'₁ de même épaisseur que la partie 102₁, puis, par réduction d'épaisseur, une partie 102'₂ de même épaisseur que la partie 102₂, la partie 102'₂ formant la partie correspondant à une pale d'aube pour l'ébauche suivante tissée.

L'insert 103₁ est de préférence en céramique monolithique, de préférence le même matériau céramique que celui de la matrice du matériau composite de l'aube à fabriquer. Ainsi, l'insert 103₁ peut être un bloc de SiC obtenu par frittage de poudre SiC.

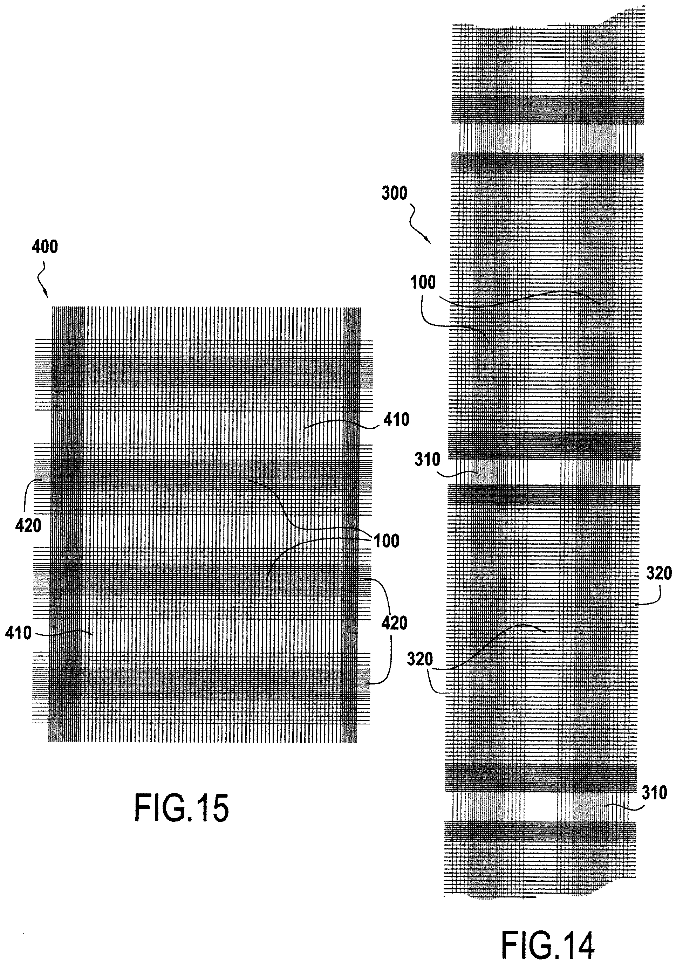

Comme le montre très schématiquement la figure 14, une pluralité d'ébauches fibreuses 100 peut être obtenue par tissage d'une bande 300 dans laquelle sont formées une ou plusieurs rangées d'ébauches fibreuses successives. Des zones de sur-longueurs 310, 320 sont ménagées en sens chaîne (uniquement fils de chaîne) et en sens trame (uniquement fils de trame) pour éviter des phénomènes de bord liés au tissage, laisser une plus grande liberté de déformation lors de la mise en forme de la préforme et aménager des zones de transition entre ébauches 100.

La figure 15 montre une variante de réalisation selon laquelle une bande 400 est réalisée avec une rangée d'ébauches 100 tissées en sens trame perpendiculairement à la direction longitudinale de la bande. Des zones de sur-longueurs 410, 420 sont également ménagées en sens chaîne et en sens trame. Plusieurs rangées d'ébauches 100 peuvent être tissées, la largeur de la bande 400 étant adaptée à cet effet.

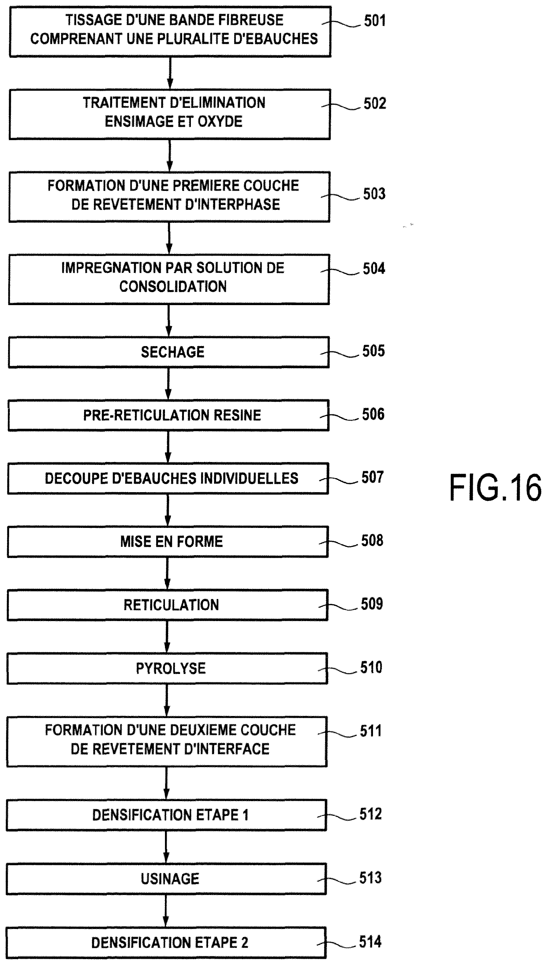

Des étapes successives d'un procédé de fabrication d'une aube en matériau composite selon un mode de mise en oeuvre de l'invention sont indiquées sur la figure 16.

A l'étape 501, une bande fibreuse est tissée par tissage tridimensionnel comprenant une pluralité d'ébauches fibreuses, par exemple plusieurs rangées d'ébauches fibreuses orientées en sens chaîne, comme montré sur la figure 15. Pour des aubes de turbomachine destinées à une utilisation à température élevée et notamment en environnement corrosif (notamment humidité), on utilise pour le tissage des fils formés de fibres en céramique, notamment des fibres de carbure de silicium (SiC).

A l'étape 502, la bande fibreuse est traitée pour éliminer l'ensimage présent sur les fibres et la présence d'oxyde à la surface des fibres. L'élimination de l'oxyde est obtenue par traitement acide, notamment par immersion dans un bain d'acide fluorhydrique. Si l'ensimage n'est pas éliminable par le traitement acide, un traitement préalable d'élimination de l'ensimage est réalisé, par exemple par décomposition de l'ensimage par bref traitement thermique.

A l'étape 503, une couche mince de revêtement d'interphase est formée sur les fibres de la bande fibreuse par infiltration chimique en phase gazeuse ou CVI ("Chemical Vapor Infiltration"). Le matériau du revêtement d'interphase est par exemple du carbone pyrolytique ou pyrocarbone (PyC), du nitrure de bore (BN) ou du carbone dopé au bore (BC, avec par exemple 5%at à 20%at de B, le complément étant C). La mince couche de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 504, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage par élimination du solvant éventuel de la résine (étape 505), une pré-réticulation de la résine peut être effectuée (étape 506). La pré-réticulation, ou réticulation incomplète permet d'accroître la raideur, donc la tenue, tout en préservant la capacité de déformation nécessaire pour la réalisation de préformes d'aubes.

A l'étape 507, les ébauches fibreuses individuelles sont découpées, comme illustré par les figures 4 et 5.

A l'étape 508, une ébauche fibreuse ainsi découpée est mise en forme (comme illustré par les figures 5 et 6) et placée dans un moule par exemple en graphite pour conformation de la partie de préforme de pale et pied et des parties de préforme de partie de plateforme, de partie de muret anti-basculement, de partie de becquets de recouvrement de talon d'aube et de partie de léchettes de talon.

Ensuite, la réticulation de la résine est achevée (étape 509) et la résine réticulée est pyrolysée (étape 510). La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Des étapes d'élimination d'ensimage, de traitement acide et de formation de revêtement d'interphase pour un substrat en fibres SiC sont connues. On pourra se référer au document US 5,071,679.

Une deuxième couche d'interphase est formée par CVI (étape 511) afin d'obtenir globalement une interphase fibres-matrice ayant une épaisseur suffisante pour assurer sa fonction de défragilisation du matériau composite. La deuxième couche d'interphase peut être en matériau choisi parmi PyC, BN, BC, pas nécessairement le même que celui de la première couche d'interphase. L'épaisseur de la deuxième couche d'interphase est de préférence au moins égale à 100 nanomètres.

La réalisation d'une interphase en deux couches, comme indiquée ci-avant est préférée. Elle est décrite dans la demande de brevet français déposée sous le N° 08 54937 par Snecma Propulsion Solide.

Une densification par une matrice de la préforme consolidée est ensuite réalisée. Pour une aube de turbomachine destinée à une utilisation à température élevée, et notamment en milieu corrosif, la matrice est en céramique, par exemple en SiC. On peut réaliser la densification par CVI, auquel cas la formation de la deuxième couche d'interphase et la densification par la matrice peuvent être enchaînées dans un même four.

La densification peut être réalisée en deux étapes successives (étapes 512 et 514) séparées par une étape 513 d'usinage de l'aube aux dimensions désirées.

On notera qu'un pré-usinage peut être réalisé entre les étapes 509 et 510, c'est-à-dire après réticulation et avant pyrolyse de la résine.

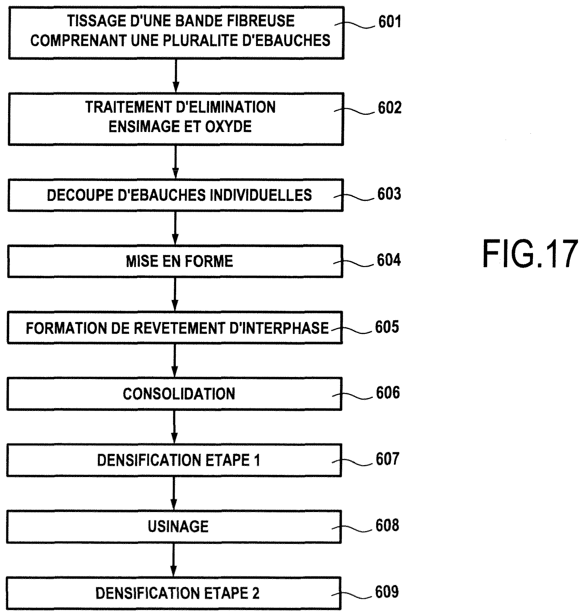

Des étapes successives d'un procédé de fabrication d'une aube en matériau composite selon un autre mode de mise en oeuvre de l'invention sont indiquées sur la figure 17.

L'étape 601 de tissage tridimensionnel d'une bande fibreuse comprenant une pluralité d'ébauches fibreuses et l'étape 602 de traitement d'élimination d'ensimage et d'oxyde sont semblables aux étapes 501 et 502 du mode de réalisation de la figure 16.

A l'étape 603, des ébauches fibreuses individuelles sont découpées dans la bande fibreuse, puis chaque ébauche fibreuse individuelle est mise en forme dans un moule ou conformateur (étape 604) pour obtenir une préforme fibreuse d'aube par conformation de la partie de préforme de pale et pied et des parties de préforme de partie de plateforme, de partie de muret anti-basculement, de partie de becquets de recouvrement de talon d'aube et de partie de léchettes de talon.

A l'étape 605, un revêtement d'interphase de défragilisation est formé par CVI sur les fibres de la préforme maintenue dans le conformateur. Le matériau du revêtement d'interphase est par exemple PyC, BN ou BC, comme précédemment mentionné. L'épaisseur du revêtement d'interphase est d'environ une à quelques centaines de nanomètres.

La préforme étant toujours maintenue dans le conformateur, une consolidation de la préforme par densification partielle est réalisée (étape 606), la consolidation étant réalisée par formation de dépôt céramique sur les fibres par CVI.

La formation du revêtement d'interphase par CVI et la consolidation par dépôt céramique par CVI peuvent être enchaînées dans un même four CVI.

Le conformateur est de préférence en graphite et présente des trous facilitant le passage des phases gazeuses réactionnelles donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée. La densification peut être réalisée en deux étapes successives (étapes 607 et 609) séparées par une étape 608 d'usinage de l'aube aux dimensions désirées.

Dans ce qui précède, on a envisagé la réalisation d'un profil de pale à épaisseur variable par l'utilisation de fils de titre et/ou contexture variables. Il est possible, en variante, de réaliser la partie d'ébauche fibreuse correspondant à la partie de préforme de pale avec un certain nombre de couches de fils de même titre et avec contexture fixe, la variation d'épaisseur du profil étant réalisée lors de l'usinage après première étape de densification ou lors d'un pré-usinage de la préforme d'aube consolidée.

Par ailleurs, selon les conditions d'utilisation envisagées pour l'aube, les fibres du renfort fibreux de l'aube peuvent être en un matériau autre qu'une céramique, par exemple en carbone, et la matrice peut être en un matériau autre qu'une céramique, par exemple en carbone ou en une résine, l'invention étant bien entendu applicable aussi à la fabrication d'aubes en matériau composite à matrice organique.

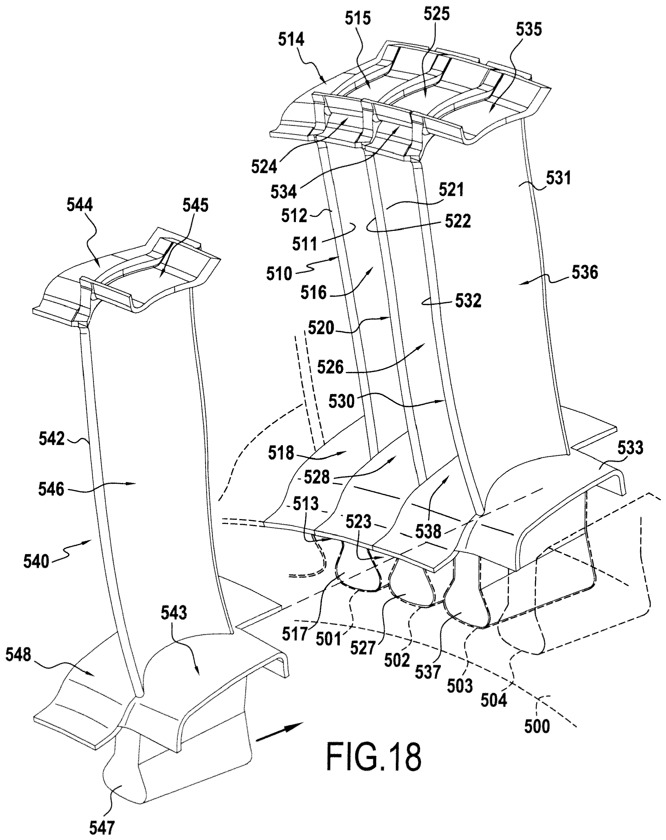

La figure 18 montre le montage sur un rotor ou disque 500 de turbomachine d'une pluralité d'aubes 510, 520, 530 et 540 présentant une structure similaire à l'aube 10 de la figure 1. Les aubes 510, 520, 530 et 540 sont montées sur le rotor 500 par engagement des pieds 517, 527, 537 et 547 de chaque aube respectivement dans des logements 501, 502, 503 et 504 de forme correspondante aménagé à la périphérie du rotor. Comme décrit ci-avant pour l'aube 10, la pale 516, respectivement 526, 536 et 546, de l'aube 510, respectivement 520, 530 et 540, comprend sur sa face 512 (extrados), respectivement 522, 532 et 542, une partie de plateforme (incluant à ses extrémités des becquets de recouvrement) 518, respectivement 528, 538 et 548 et une partie de becquets de talon d'aube 514, respectivement 524, 534 et 544. En outre, sur sa face 511 (intrados), respectivement 521, 531 et 541, la pale 516, respectivement 526, 536 et 546, comprend une partie de muret anti-basculement 513, respectivement 523, 533 et 543 et une partie de léchettes de talon d'aube 515, respectivement 525, 535 et 545.

Comme montrées sur la figure 18, les aubes s'emboitent les unes avec les autres, une aube déjà montée, par exemple l'aube 530, recevant au-dessus de sa partie de muret anti-basculement, ici 533, la partie de plateforme de l'aube adjacente, ici la partie de plateforme 548 de l'aube 540. De même, l'aube 530 reçoit au-dessous de sa partie léchettes de talon d'aube 535 la partie becquets de talon d'aube 544 de l'aube 540.

Une fois montée les unes avec les autres, chaque aube, par exemple ici l'aube 520, comporte de chaque côté de sa pale, ici la pale 526, les fonctions habituellement présentes à son extrémité radiale interne, à savoir la fonction d'anti-basculement assurée ici par la réunion des parties de muret anti-basculement 513 et 523 et la fonction de définition de veine assurée ici par la réunion des parties de plateforme 528 et 538, ainsi qu'à son extrémité radiale externe, à savoir la fonction de définition de veine assurée par la réunion des parties becquets de talon 524 et 534 et la fonction d'étanchéité assurée par la réunion des parties léchettes de talon 515 et 525.

L'aube 10 décrite ci-avant en relation avec la figure 1 comprend sur la face 22 ou extrados de sa pale 20 la partie de plateforme d'aube 40 et la partie léchettes de talon d'aube 70 tandis qu'elle comprend sur la face 21 ou intrados de sa pale 20 la partie de muret anti-basculement 50 et la partie becquets de talon d'aube 60. Selon des variantes de réalisation, les parties de plateforme d'aube et de léchettes de talon d'aube peuvent être disposées sur l'intrados de la pale de l'aube tandis que les parties de muret anti-basculement et de becquets de talon d'aube peuvent être disposées sur l'extrados de la pale de l'aube. Selon encore d'autres variantes de réalisation, la répartition des parties de plateforme d'aube, de léchettes de talon d'aube, de muret anti-basculement et de becquets de talon d'aube sur les faces de la pale d'aube peut être telle que la pale comporte sur une des faces de sa pale seulement une des parties de plateforme d'aube, de léchettes de talon d'aube, de muret anti-basculement et de becquets de talon d'aube, les trois autres parties étant disposées sur l'autre face de la pale ou telle que ces quatre parties sont toutes présentes sur la même face de la pale. Toutefois, pour une meilleure répartition des masses sur l'aube, l'aube comporte de préférence deux parties sur une face et les deux autres parties sur la face opposée de la pale.

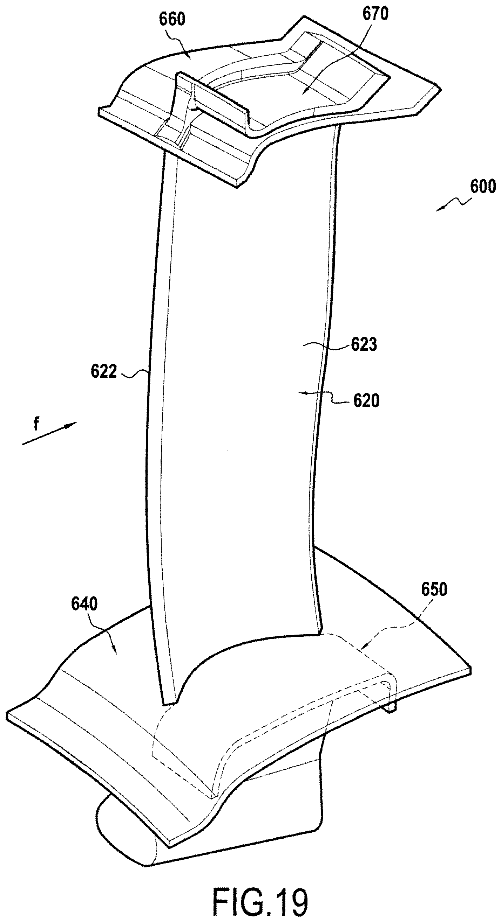

Toujours suivant d'autres variantes de réalisation de l'aube selon l'invention, une partie des éléments de plateforme d'aube, de léchettes de talon d'aube, de muret anti-basculement et de becquets de talon d'aube peuvent être en présents de chaque côté des faces de la pale tandis que certains autres de ces éléments ne sont présents que sur une face de la pale comme décrit ci-avant. La figure 19 illustre un tel exemple de variante de réalisation avec une aube 600 qui comporte une plateforme 640 et des becquets de talon d'aube 660 complets en ce qu'ils sont présents sur les deux faces 622 et 623 de la pale 620 tandis que seules des parties de muret anti-basculement 650 et de léchettes de talon d'aube 670 sont présentes uniquement respectivement sur la face 623 de la pale 620. Dans ce cas, la bande fibreuse destinée à former la pale, telle que la bande 102 décrite ci-avant, et traversée au niveau des parties de raccordement, telles que les parties 140c et 150c décrites précédemment, par deux bandes fibreuses, telles que la bande 104, afin de permettre d'avoir des portions de bande fibreuse indépendantes permettant de réaliser à la fois une plateforme et des becquets de talon d'aube et des parties de muret anti-basculement et de léchettes de talon d'aube.

## Revendications

1. Procédé de fabrication d'une aube (10) de turbomachine en matériau composite comprenant un renfort fibreux densifié par une matrice, le procédé comprenant :
- la réalisation par tissage tridimensionnel d'une ébauche fibreuse (100) en une seule pièce,
- la mise en forme de l'ébauche fibreuse (100) pour obtenir une préforme fibreuse (200) en une seule pièce ayant une première partie formant préforme de pale (220) et pied d'aube (230), la pale d'aube présentant deux faces reliant chacune un bord d'attaque à un bord de fuite, et au moins une deuxième partie présente uniquement sur une des faces de la pale d'aube, ladite deuxième partie formant préforme d'une partie d'au moins un des éléments suivants: plateforme d'aube (240), muret anti-basculement d'aube (250), becquets de talon d'aube (260) et léchettes de talon d'aube (270),
- la densification de la préforme par une matrice pour obtenir une aube en matériau composite ayant un renfort fibreux constitué par la préforme et densifié par la matrice, et formant une seule pièce avec au moins une partie d'un des éléments suivants: plateforme d'aube (40), muret anti-basculement d'aube (50), becquets de talon d'aube (60) et léchettes de talon d'aube (70), présent uniquement sur une des faces de la pale d'aube.

2. Procédé selon la revendication 1, où, dans la direction longitudinale de l'ébauche fibreuse correspondant à la direction longitudinale de l'aube à fabriquer, l'ébauche fibreuse comprend un premier ensemble (102) de plusieurs couches de fils qui sont liées entre elles pour former une première partie de l'ébauche correspondant à la préforme de pale (220) et pied d'aube (230), et un deuxième ensemble (104) de plusieurs couches de fils qui sont liées entre elles au moins localement pour former sur une des faces de la pale d'aube au moins la deuxième partie de l'ébauche correspondant à une préforme d'une partie d'au moins un des éléments suivants: plateforme d'aube (240), muret anti-basculement d'aube (250), becquets de talon d'aube (260) et léchettes de talon d'aube (270), les fils du premier ensemble (102) de couches de fils ne sont pas liés aux fils du deuxième ensemble (104) de couches de fils, et le premier ensemble de couches de fils est traversé par des fils du deuxième ensemble de couches de fils au niveau de la ou de chaque deuxième partie de l'ébauche.

3. Procédé selon la revendication 1, où, dans la direction longitudinale correspondant à la direction longitudinale de l'ébauche fibreuse à fabriquer, l'ébauche fibreuse comprend:
- un premier ensemble (102) de plusieurs couches de fils qui sont liées entre elles pour former une première partie de l'ébauche correspondant à la préforme de pale (220) et pied (230) d'aube;
- un deuxième ensemble (104) de plusieurs couches de fils qui sont liées entre elles au moins localement pour former sur une des faces de la pale au moins une deuxième partie de l'ébauche correspondant à la préforme d'une partie de plateforme d'aube (240) et/ou de becquets de talon d'aube (260) et au moins une troisième partie de l'ébauche correspondant à la préforme d'une partie de muret anti-basculement d'aube (250) et/ou de léchettes de talon d'aube (270);
les fils du premier ensemble (102) de couches de fils ne sont pas liés aux fils du deuxième ensemble (104) de couches de fils, et
le premier ensemble (102) de couches de fils est traversé par des fils du deuxième ensemble (104) de couches de fils au niveau de la ou de chaque deuxième partie de l'ébauche fibreuse et au niveau de la ou de chaque troisième partie de l'ébauche fibreuse.

4. Procédé selon la revendication 3, où l'ébauche fibreuse est tissée avec un deuxième ensemble et un troisième ensemble continus de couches de fils et la mise en forme de l'ébauche fibreuse comprend l'élimination par découpe de parties du deuxième ensemble de couches de fils extérieures à la ou à chaque deuxième partie de l'ébauche fibreuse et à la ou à chaque troisième partie de l'ébauche fibreuse.

5. Procédé selon la revendication 1, où, dans la direction longitudinale correspondant à la direction longitudinale de l'ébauche fibreuse à fabriquer, l'ébauche fibreuse comprend:
- un premier ensemble de plusieurs couches de fils qui sont liées entre elles pour former une première partie de l'ébauche correspondant à la préforme de pale et pied d'aube;
- un deuxième ensemble de plusieurs couches de fils qui sont liées entre elles au moins localement pour former sur une des faces de la pale au moins une deuxième partie de l'ébauche correspondant à la préforme d'une partie d'au moins un des éléments suivants: plateforme d'aube, muret anti-basculement d'aube, becquets de talon d'aube et léchettes de talon d'aube et une troisième partie de l'ébauche correspondant à la préforme de tout ou partie d'un desdits éléments autre que celui formé par la deuxième partie; et
- un troisième ensemble de plusieurs couches de fils qui sont liées entre elles au moins localement pour former sur une face de la pale au moins une quatrième partie de l'ébauche correspondant à la préforme de tout ou partie d'un desdits éléments autre que celui formé par les deuxième et troisième parties et une cinquième partie de l'ébauche correspondant à la préforme de tout ou partie d'un desdits éléments autre que celui formé par les deuxième, troisième et quatrième parties;
les fils du premier ensemble de couches de fils ne sont pas liés aux fils des deuxième et troisième ensembles de couches de fils, et
le premier ensemble de couches de fils est traversé par des fils des deuxième et troisième ensembles de couches de fils au niveau des deuxième, troisième, quatrième et cinquième parties de l'ébauche fibreuse.

6. Procédé selon la revendication 5, où l'ébauche fibreuse est tissée avec un deuxième ensemble et un troisième ensemble continus de couches de fils et la mise en forme de l'ébauche fibreuse comprend l'élimination par découpe de parties des deuxième et troisième ensembles de couches de fils extérieures aux deuxième, troisième, quatrième et cinquième parties de l'ébauche fibreuse.

7. Procédé selon l'une quelconque des revendications 1 à 6, où, dans la première partie de l'ébauche fibreuse et dans une direction correspondant à celle s'étendant le long du profil d'une pale d'épaisseur variable dans l'aube à fabriquer, le nombre de couches de fils dans le premier ensemble de couches de fils est constant.

8. Procédé selon l'une quelconque des revendications 1 à 7, où l'on réalise par tissage tridimensionnel une bande (400) comprenant une succession d'ébauches fibreuses (100).

9. Aube (10) de turbomachine en matériau composite comprenant un renfort fibreux obtenu par tissage tridimensionnel de fils et densifié par une matrice, l'aube comprenant une première partie constitutive de pale (20) et pied d'aube (30), la pale d'aube (20) présentant deux faces (22, 23) reliant chacune un bord d'attaque (20a) à un bord de fuite (20b),
**caractérisée en ce que** ladite première partie forme une seule pièce avec au moins une deuxième partie présente uniquement sur une des faces de la pale d'aube, ladite deuxième partie étant constitutive d'une partie d'au moins un des éléments suivants: plateforme d'aube (40), muret anti-basculement d'aube (50), becquets de talon d'aube (60) et léchettes de talon d'aube (70), les parties du renfort fibreux correspondant à la première et la deuxième parties de l'aube étant au moins en partie mutuellement imbriquées, avec des fils de la première partie du renfort fibreux pénétrant dans la deuxième partie de renfort fibreux.

10. Aube selon la revendication 9, **caractérisée en ce que** la deuxième partie est constitutive d'une partie d'un des éléments suivants: plateforme d'aube(40), muret anti-basculement d'aube (50), becquets de talon d'aube (60) et léchettes de talon d'aube (70) et **en ce que** la première partie forme en outre une seule pièce avec au moins une troisième partie constitutive d'une partie d'au moins un desdits éléments autre que celui constitué par ladite deuxième partie, ladite troisième partie étant présente uniquement sur une face de la pale,
les parties du renfort fibreux correspondant aux première, deuxième et troisième parties de l'aube étant au moins en partie mutuellement imbriquées, avec des fils de la première partie du renfort fibreux pénétrant dans les deuxième et troisième parties de renfort fibreux.

11. Aube selon la revendication 10, **caractérisée en ce que** la première partie forme en outre une seule pièce avec au moins une quatrième partie constitutive d'une partie d'au moins un desdits éléments autre que celui constitué par lesdites deuxième et troisième parties, ladite quatrième partie étant présente uniquement sur une face de la pale,
les parties du renfort fibreux correspondant aux première, deuxième, troisième et quatrième parties de l'aube étant au moins en partie mutuellement imbriquées, avec des fils de la première partie du renfort fibreux pénétrant dans les deuxième, troisième et quatrième parties de renfort fibreux.

12. Aube selon la revendication 11, **caractérisée en ce que** la première partie forme en outre une seule pièce avec au moins une cinquième partie constitutive d'une partie d'au moins un desdits éléments autre que celui constitué par lesdites deuxième, troisième et quatrième parties, ladite cinquième partie étant présente uniquement sur une face de la pale,
les parties du renfort fibreux correspondant aux première, deuxième, troisième, quatrième et cinquième parties de l'aube étant au moins en partie mutuellement imbriquées, avec des fils de la première partie du renfort fibreux pénétrant dans les deuxième, troisième, quatrième et cinquième parties de renfort fibreux.

13. Aube (600) selon la revendication 9, **caractérisée en ce que** la deuxième partie est constitutive d'une partie d'un des éléments suivants: plateforme d'aube, muret anti-basculement d'aube (650), becquets de talon d'aube et léchettes de talon d'aube (670) et **en ce que** la première partie forme en outre une seule pièce avec au moins une troisième partie constitutive de tout ou partie d'au moins un desdits éléments autre que celui constitué par ladite deuxième partie,
les parties du renfort fibreux correspondant aux première, deuxième et troisième parties de l'aube étant au moins en partie mutuellement imbriquées, avec des fils de la première partie du renfort fibreux pénétrant dans les deuxième et troisième parties de renfort fibreux.

14. Disque de turbomachine comprenant une pluralité d'aubes selon l'une quelconque des revendications 9 à 13.

15. Turbomachine équipée d'une aube selon l'une quelconque des revendications 9 à 13 ou fabriquée selon le procédé de l'une quelconque des revendications 1 à 8.

## Patentansprüche

1. Verfahren zur Herstellung einer Schaufel (10) einer Turbomaschine aus Verbundwerkstoff mit einer durch eine Matrix verdichteten Faserverstärkung, wobei das Verfahren umfasst:
- die Herstellung eines einstückigen Faserrohlings (100) durch dreidimensionales Weben,
- das Informbringen des Faserrohlings (100), um einen einstückigen Faservorformling (200) zu erhalten, der einen einen Blatt- (220) und Schaufelfuß-Vorformling (230) bildenden ersten Teil hat, wobei das Schaufelblatt zwei Seiten aufweist, die jeweils eine Eintrittskante mit einer Austrittskante verbinden, sowie wenigstens einen zweiten Teil, der nur auf einer der Seiten des Schaufelblattes vorhanden ist, wobei der zweite Teil einen Vorformling eines Teils von wenigstens einem der folgenden Elemente bildet: Schaufelplattform (240), Schaufel-Kippschutzmäuerchen (250), Schaufeldeckband-Spoiler (260) und Schaufeldeckband-Zungen (270),
- das Verdichten des Vorformlings durch eine Matrix, um eine Schaufel aus Verbundwerkstoff zu erhalten, die eine durch den Vorformling gebildete und durch die Matrix verdichtete Faserverstärkung aufweist und die mit wenigstens einem Teil von einem der folgenden Elemente ein einziges Teil bildet: Schaufelplattform (40), Schaufel-Kippschutzmäuerchen (50), Schaufeldeckband-Spoiler (60) und Schaufeldeckband-Zungen (70), lediglich auf einer der Seiten des Schaufelblattes vorhanden.

2. Verfahren nach Anspruch 1, bei dem in der Längsrichtung des Faserrohlings, die der Längsrichtung der herzustellenden Schaufel entspricht, der Faserrohling eine erste Anordnung (102) aus mehreren Fadenlagen, die untereinander verbunden sind, um einen ersten Teil des Rohlings zu bilden, der dem Blatt- (220) und Schaufelfuß-Vorformling (230) entspricht, sowie eine zweite Anordnung (104) aus mehreren Fadenlagen umfasst, die wenigstens lokal untereinander verbunden sind, um auf einer der Seiten des Schaufelblattes wenigstens den zweiten Teil des Rohlings zu bilden, der einem Vorformling eines Teils von wenigstens einem der folgenden Elemente entspricht: Schaufelplattform (240), Schaufel-Kippschutzmäuerchen (250), Schaufeldeckband-Spoiler (260) und Schaufeldeckband-Zungen (270), wobei die Fäden der ersten Anordnung (102) aus Fadenlagen nicht mit den Fäden der zweiten Anordnung (104) aus Fadenlagen verbunden sind, und die erste Anordnung aus Fadenlagen im Bereich des oder jedes zweiten Teils des Rohlings von Fäden der zweiten Anordnung aus Fadenlagen durchquert ist.

3. Verfahren nach Anspruch 1, bei dem in der Längsrichtung, welche der Längsrichtung des herzustellenden Faserrohlings entspricht, der Faserrohling umfasst:
- eine erste Anordnung (102) aus mehreren Fadenlagen, die untereinander verbunden sind, um einen ersten Teil des Rohlings zu bilden, der dem Blatt- (220) und Schaufelfuß-Vorformling (230) entspricht,
- eine zweite Anordnung (104) aus mehreren Fadenlagen, die wenigstens lokal untereinander verbunden sind, um auf einer der Seiten des Blattes wenigstens einen zweiten Teil des Rohlings zu bilden, der dem Vorformling eines Teils einer Schaufelplattform (240) und/oder von Schaufeldeckband-Spoilern (260) entspricht, sowie wenigstens einen dritten Teil des Rohlings, der dem Vorformling eines Teils eines Schaufel-Kippschutzmäuerchens (250) und/oder von Schaufeldeckband-Zungen (270) entspricht,
die Fäden der ersten Anordnung (102) aus Fadenlagen nicht mit den Fäden der zweiten Anordnung (104) aus Fadenlagen verbunden sind, und
die erste Anordnung (102) aus Fadenlagen im Bereich des oder jedes zweiten Teils des Faserrohlings und im Bereich des oder jedes dritten Teils des Faserrohlings von Fäden der zweiten Anordnung (104) aus Fadenlagen durchquert ist.

4. Verfahren nach Anspruch 3, bei dem der Faserrohling mit einer durchgehenden zweiten Anordnung und einer durchgehenden dritten Anordnung aus Fadenlagen gewebt ist, und das Informbringen des Faserrohlings das Wegschneiden von Teilen der zweiten Anordnung aus Fadenlagen, die außerhalb des oder jedes zweiten Teils des Faserrohlings sowie des oder jedes dritten Teils des Faserrohlings gelegen sind, umfasst.

5. Verfahren nach Anspruch 1, bei dem in der Längsrichtung, welche der Längsrichtung des herzustellenden Faserrohlings entspricht, der Faserrohling umfasst:
- eine erste Anordnung aus mehreren Fadenlagen, die untereinander verbunden sind, um einen ersten Teil des Rohlings zu bilden, der dem Blatt- und Schaufelfuß-Vorformling entspricht,
- eine zweite Anordnung aus mehreren Fadenlagen, die wenigstens lokal untereinander verbunden sind, um auf einer der Seiten des Blattes wenigstens einen zweiten Teil des Rohlings zu bilden, der dem Vorformling eines Teils von wenigstens einem der folgenden Elemente entspricht: Schaufelplattform, Schaufel-Kippschutzmäuerchen, Schaufeldeckband-Spoilern und Schaufeldeckband-Zungen, sowie wenigstens einen dritten Teil des Rohlings, der dem Vorformling eines anderen - ganz oder zum Teil - der Elemente als des durch den zweiten Teil gebildeten entspricht, und
- eine dritte Anordnung aus mehreren Fadenlagen, die wenigstens lokal untereinander verbunden sind, um auf einer der Seiten des Blattes wenigstens einen vierten Teil des Rohlings zu bilden, der dem Vorformling eines anderen - ganz oder zum Teil - der Elemente als des durch den zweiten und den dritten Teil gebildeten entspricht, sowie einen fünften Teil des Rohlings, der dem Vorformling eines anderen - ganz oder zum Teil - der Elemente als des durch den zweiten, dritten und vierten Teil gebildeten entspricht,
die Fäden der ersten Anordnung aus Fadenlagen nicht mit den Fäden der zweiten und der dritten Anordnung aus Fadenlagen verbunden sind, und
die erste Anordnung aus Fadenlagen im Bereich des zweiten, des dritten, des vierten und des fünften Teils des Faserrohlings von Fäden der zweiten und der dritten Anordnung aus Fadenlagen durchquert ist.

6. Verfahren nach Anspruch 5, bei dem der Faserrohling mit einer durchgehenden zweiten Anordnung und einer durchgehenden dritten Anordnung aus Fadenlagen gewebt ist, und das Informbringen des Faserrohlings das Wegschneiden von Teilen der zweiten und der dritten Anordnung aus Fadenlagen, die außerhalb des zweiten, des dritten, des vierten und des fünften Teils des Faserrohlings gelegen sind, umfasst.

7. Verfahren nach einem der Ansprüche 1 bis 6, bei dem in dem ersten Teil des Faserrohlings und in einer Richtung, die derjenigen entspricht, die entlang dem Profil eines Blattes mit variabler Dicke in der herzustellenden Schaufel verläuft, die Anzahl der Fadenlagen in der ersten Anordnung aus Fadenlagen konstant ist.

8. Verfahren nach einem der Ansprüche 1 bis 7, bei dem durch dreidimensionales Weben ein Band (400), das eine Folge von Faserrohlingen (100) umfasst, hergestellt wird.

9. Schaufel (10) einer Turbomaschine aus Verbundwerkstoff mit einer Faserverstärkung, die durch dreidimensionales Weben von Fäden erhalten wird und durch eine Matrix verdichtet ist, wobei die Schaufel einen das Blatt (20) und den Schaufelfuß (30) bildenden ersten Teil umfasst, wobei das Schaufelblatt (20) zwei Seiten (22, 23) umfasst, die jeweils eine Eintrittskante (20a) mit einer Austrittskante (20b) verbinden,
**dadurch gekennzeichnet, dass** der erste Teil mit wenigstens einem zweiten Teil, der lediglich auf einer der Seiten des Schaufelblattes vorhanden ist, ein einziges Teil bildet, wobei der zweite Teil einen Teil von wenigstens einem der folgenden Elemente bildet: Schaufelplattform (40), Schaufel-Kippschutzmäuerchen (50), Schaufeldeckband-Spoiler (60) und Schaufeldeckband-Zungen (70), wobei die Teile der Faserverstärkung, die dem ersten und dem zweiten Teil der Schaufel entsprechen, wenigstens teilweise ineinandergefügt sind, wobei Fäden des ersten Teils der Faserverstärkung in den zweiten Faserverstärkungsteil eindringen.

10. Schaufel nach Anspruch 9, **dadurch gekennzeichnet, dass** der zweite Teil einen Teil von einem der folgenden Elemente bildet: Schaufelplattform (40), Schaufel-Kippschutzmäuerchen (50), Schaufeldeckband-Spoiler (60) und Schaufeldeckband-Zungen (70), und dass der erste Teil ferner ein einziges Teil mit wenigstens einem dritten Teil bildet, welcher einen Teil von wenigstens einem anderen der Elemente als des durch den zweiten Teil gebildeten bildet, wobei der dritte Teil lediglich auf einer Seite des Blattes vorhanden ist,
wobei die Teile der Faserverstärkung, die dem ersten, dem zweiten und dem dritten Teil der Schaufel entsprechen, wenigstens teilweise ineinandergefügt sind, wobei Fäden des ersten Teils der Faserverstärkung in den zweiten und den dritten Faserverstärkungsteil eindringen.

11. Schaufel nach Anspruch 10, **dadurch gekennzeichnet, dass** der erste Teil ferner ein einziges Teil mit wenigstens einem vierten Teil bildet, welcher einen Teil von wenigstens einem anderen der Elemente als des durch den zweiten und den dritten Teil gebildeten bildet, wobei der vierte Teil lediglich auf einer Seite des Blattes vorhanden ist,
wobei die Teile der Faserverstärkung, die dem ersten, dem zweiten, dem dritten und dem vierten Teil der Schaufel entsprechen, wenigstens teilweise ineinandergefügt sind, wobei Fäden des ersten Teils der Faserverstärkung in den zweiten, den dritten und den vierten Faserverstärkungsteil eindringen.

12. Schaufel nach Anspruch 11, **dadurch gekennzeichnet, dass** der erste Teil ferner ein einziges Teil mit wenigstens einem fünften Teil bildet, welcher einen Teil von wenigstens einem anderen der Elemente als des durch den zweiten, den dritten und den vierten Teil gebildeten bildet, wobei der fünfte Teil lediglich auf einer Seite des Blattes vorhanden ist,
wobei die Teile der Faserverstärkung, die dem ersten, dem zweiten, dem dritten, dem vierten und dem fünften Teil der Schaufel entsprechen, wenigstens teilweise ineinandergefügt sind, wobei Fäden des ersten Teils der Faserverstärkung in den zweiten, den dritten, den vierten und den fünften Faserverstärkungsteil eindringen.

13. Schaufel (600) nach Anspruch 9, **dadurch gekennzeichnet, dass** der zweite Teil einen Teil von einem der folgenden Elemente bildet: Schaufelplattform, Schaufel-Kippschutzmäuerchen (650), Schaufeldeckband-Spoiler und Schaufeldeckband-Zungen (670), und dass der erste Teil ferner ein einziges Teil mit wenigstens einem dritten Teil bildet, welcher - ganz oder zum Teil - wenigstens ein anderes der Elemente als des durch den zweiten Teil gebildeten bildet,
wobei die Teile der Faserverstärkung, die dem ersten, dem zweiten und dem dritten Teil der Schaufel entsprechen, wenigstens teilweise ineinandergefügt sind, wobei Fäden des ersten Teils der Faserverstärkung in den zweiten und den dritten Faserverstärkungsteil eindringen.

14. Scheibe einer Turbomaschine mit einer Vielzahl von Schaufeln nach einem der Ansprüche 9 bis 13.

15. Turbomaschine, die mit einer Schaufel nach einem der Ansprüche 9 bis 13 oder hergestellt nach dem Verfahren von einem der Ansprüche 1 bis 8 ausgerüstet ist.

## Claims

1. A method of fabrication for a turbomachine blade (10) of composite material including a fiber reinforcement densified by a matrix, the method including:
- fabrication by three-dimensional weaving of a one-piece fiber blank (100),
- shaping of the fiber blank (100) to obtain a one-piece fiber preform (200) having a first portion constituting an airfoil (220) and blade root (230) preform, the blade airfoil exhibiting two faces each connecting a leading edge with a trailing edge, and at least one second portion present only on one of the faces of the blade airfoil, said second portion constituting a preform of at least one of the following elements: blade inner platform (240), blade anti-tilting wall (250), blade outer platform spoilers (260) and blade outer platform wipers (270),
- densification of the preform by a matrix to obtain a blade made of composite material having a fiber reinforcement consisting of the preform and densified by the matrix, and forming a single piece with at least a portion of one of the following elements: blade inner platform (40), blade anti-tilting wall (50), blade outer platform spoilers (60) and blade outer platform wipers (70), present only on one of the faces of the blade airfoil.

2. The method according to Claim 1, wherein, in the longitudinal direction of the fiber blank corresponding to the longitudinal direction of the vane to be fabricated, the fiber blank has a first set (102) of several layers of yarns which are interlinked to constitute a first portion of the blank corresponding to the preform of the airfoil (220) and the blade root (230), and a second set (104) of several layers of yarns which are interlinked at least locally so as to constitute on one of the faces of the blade airfoil at least the second portion of the blank corresponding to a preform of one portion of at least one of the following element: blade inner platform (240), blade anti-tilting wall (250), blade outer platform spoilers (260) and blade outer platform wipers (270), the yarns of the first set (102) of yarn layers are not linked to the yarns of the second set (104) of yarn layers, and the first set of yarn layers is crossed by yarns from the second set of yarn layers at the or at each second portion of the blank.

3. The method according to Claim 1, wherein, in the longitudinal direction corresponding to the longitudinal direction of the fiber blank to be fabricated, the fiber blank includes:
- a first set (102) of several yarn layers which are interlinked to form a first portion of the blank corresponding to the airfoil (220) and blade root (230) preform;
- a second set (104) of several yarn layers which are interlinked at least locally to form on one of the faces of the airfoil at least one second portion of the blank corresponding to the preform of a blade inner platform (240) portion and/or of a blade outer platform spoilers (260) portion and at least one third portion of the blank corresponding to a preform of a blade anti-tilting wall (250) portion and/or of a blade outer platform wiper (270) portion;
the yarns of the first set (102) of yarn layers are not linked to the yarns of the second set (104) of yarn layers, and
the first set (102) of yarn layers is crossed by yarns of the second set (104) of yarn layers at the or at each second portion of the fiber blank and at the or at each third portion of the fiber blank.

4. The method according to Claim 3, wherein the fiber blank is woven with a second and a third continuous sets of yarn layers and the shaping of the fiber blank includes the elimination by cutting out of portions of the second set of yarn layers outside of the or of each second portion of the fiber blank and of the or of each third portion of the fiber blank.

5. The method according to Claim 1, wherein, in the longitudinal direction corresponding to the longitudinal direction of the fiber blank to be fabricated, the fiber blank includes:
- a first set of several layers of yarns which are interlinked to form a first portion of the blank corresponding to the airfoil and blade root preform;
- a second set of several layers of yarns which are interlinked at least locally to form on one of the faces of the airfoil at least one second portion of the blank corresponding to the preform of a portion of a least one of the following elements: blade inner platform, blade anti-tilting wall, blade outer platform spoilers and blade outer platform wipers and a third portion of the blank corresponding to the preform of all or a portion of said elements other than that constituted by the second portion; and
- a third set of several layers of yarns which are interlinked at least locally to form on one face of the airfoil at least one fourth portion of the blank corresponding to the preform of all or part of one of said elements other than that constituted by the second and third portions and a fifth portion of the blank corresponding to the preform of all or a portion of one of said elements other than that constituted by the second, third and fourth portions;
the yarns of the first set of yarn layers are not linked to the yarns of the second and third sets of yarn layers, and
the first set of yarn layers is crossed by yarns of the second and third sets of yarn layers at the second, third, fourth and fifth portions of the fiber blank.

6. The method according to Claim 5, wherein the fiber blank is woven with a second and a third continuous set of yarn layers and the shaping of the fiber blank includes the elimination by cutting out of portions of the second and third sets of yarn layers outside of the second, third, fourth and fifth portions of the fiber blank.

7. The method according to any one of Claims 1 to 6, wherein, in the first portion of the fiber blank and in a direction corresponding to that extending along the profile of an airfoil of variable thickness in the blade to be fabricated, the number of yarn layers in the first set of yarn layers is constant.

8. The method according to any one of Claims 1 to 7, wherein a strip (400) is made by three-dimensional weaving, including a succession of fiber blanks (100).

9. A turbomachine blade (10) made of composite material including a fiber reinforcement obtained by three-dimensional weaving of yarns and densified by a matrix, the blade including a first portion constituting an airfoil (20) and a blade root (30), the blade airfoil (20) exhibiting two faces (22, 23) each connecting a leading edge (20a) and a trailing edge (20b),
**characterized in that** said first portion forms a single piece with at least one second portion present only on one of the faces of the blade airfoil, said second portion constituting a portion of at least one of the following elements: blade inner platform (40), blade anti-tilting wall (50), blade outer platform spoilers (60) and blade outer platform wipers (70), the portions of the fiber reinforcement corresponding to the first and the second portions of the blade being at least partially mutually imbricated, with yarns of the first portion of the fiber reinforcement penetrating into the second portion of the fiber reinforcement.

10. The blade according to Claim 9, **characterized in that** the second portion constitutes a portion of one of the following elements: blade inner platform (40), blade anti-tilting wall (50), blade outer platform spoilers (60) and blade outer platform wipers (70) and **in that** the first portion also forms a single piece with at least one third portion constituting a portion of at least one of the said elements other than that already constituted by said second portion, said third portion being present only on one face of the airfoil,
the portions of the fiber reinforcement corresponding to the first, second and third portions of the blade being at least partially mutually imbricated, with yarns of the first portion of the fiber reinforcement penetrating into the second and third portions of the fiber reinforcement.

11. The blade according to Claim 10, **characterized in that** the first portion also forms a single piece with at least one fourth portion constituting a portion of at least one of said elements other than that constituted by said second and third portions, said fourth portion being present only on one face of the airfoil,
the portions of the fiber reinforcement corresponding to the first, second, third and fourth portions of the blade being at least partially mutually imbricated, with yarns of the first portion of the fiber reinforcement penetrating into the second, third and fourth portions of fiber reinforcement.

12. The blade according to Claim 11, **characterized in that** the first portion also forms a single piece with at least one fifth portion constituting a portion of at least one of said elements other than that constituted by said second, third and fourth portions, said fifth portion being present only on one face of the airfoil,
the portions of the fiber reinforcement corresponding to the first, second, third fourth and fifth portions of the blade being at least partially mutually imbricated, with yarns of the first portion of the fiber reinforcement penetrating into the second, third, fourth and fifth portions of fiber reinforcement.

13. The blade (600) according to Claim 9, **characterized in that** the second portion constitutes a portion of one of the following elements: blade inner platform, blade anti-tilting wall (650), blade outer platform spoilers and blade outer platform wipers (670) and **in that** the first portion forms a single piece with at least one third portion constituting all or a portion of at least one of said elements other than that constituted by said second portion,
the portions of the fiber reinforcement corresponding to the first, second and third portions of the blade being at least partially mutually imbricated, with yarns of the first portion of the fiber reinforcement penetrating into the second and third portions of the fiber reinforcement.

14. A turbomachine disk including a plurality of blades according to any one of Claims 9 to 13.

15. A turbomachine equipped with a blade according to any one of Claims 9 to 13 or fabricated according to the method of any one of Claims 1 to 8.
